(19) Europäisches Patentamt
European Patent Office
Office européen des brevets

(11) **EP 2 187 351 B1**

(12) **EUROPÄISCHE PATENTSCHRIFT**

(45) Veröffentlichungstag und Bekanntmachung des Hinweises auf die Patenterteilung:
**03.09.2014 Patentblatt 2014/36**

(51) Int Cl.:
***G06T 7/00*** *(2006.01)*

(21) Anmeldenummer: **09013865.2**

(22) Anmeldetag: **04.11.2009**

(54) **Verfahren und Vorrichtung zum Erkennen von Objekten**

Device and method for detecting objects

Procédé et dispositif destinés à la reconnaissance d'objets

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.11.2008 DE 102008056600**

(43) Veröffentlichungstag der Anmeldung:
**19.05.2010 Patentblatt 2010/20**

(73) Patentinhaber: **Fraunhofer-Gesellschaft zur Förderung der angewandten Forschung e.V.
80686 München (DE)**

(72) Erfinder:
• **Kuleschow, Andreas
90522 Oberasbach (DE)**
• **Spinnler, Klaus
91056 Erlangen (DE)**
• **Münzenmayer, Christian
90409 Nürnberg (DE)**

(74) Vertreter: **Hersina, Günter et al
Schoppe, Zimmermann, Stoeckeler & Zinkler
Postfach 246
82043 Pullach (DE)**

(56) Entgegenhaltungen:
• **ANDREAS KULESCHOW ET AL: "A Fast Logical-Morphological Method to Segment Scratch - Type Objects" COMPUTER VISION AND GRAPHICS, SPRINGER BERLIN HEIDELBERG, BERLIN, HEIDELBERG, Bd. 5337, 10. November 2008 (2008-11-10), Seiten 14-23, XP019119669 ISBN: 978-3-642-02344-6**
• **JUNFENG GE ET AL: "Adaptive hysteresis thresholding based pedestrian detection in nighttime using a normal camera" VEHICULAR ELECTRONICS AND SAFETY, 2005. IEEE INTERNATIONAL CONFERENCE ON XI'AN, CHINA OCT. 14-16, 2005, PISCATAWAY, NJ, USA, IEEE, 14. Oktober 2005 (2005-10-14), Seiten 46-51, XP010867242 ISBN: 978-0-7803-9435-3**
• **BANHART (ED.), OHSER, SCHLADITZ: "Advanced Tomographic Methods in Materials Research and Engineering" 20. März 2008 (2008-03-20), OXFORD UNIVERSITY PRESS , OXFORD, UK , XP002570493 ISBN: 978-0-19-921324-5 * Seiten 37, 56-57, 74-77 ***
• **SOILLE, PIERRE: "MORPHOLOGICAL IMAGE ANALYSIS" 1999, SPRINGER VERLAG , BERLIN, HEIDELBERG , XP002570494 * Seiten 155-167 ***
• **FENG JING ET AL: "Unsupervised image segmentation using local homogeneity analysis" PROCEEDINGS OF THE 2003 IEEE INTERNATIONAL SYMPOSIUM ON CIRCUITS AND SYSTEMS; BANGKOK, THAILAND - MAY 25-28 2003; [IEEE INTERNATIONAL SYMPOSIUM ON CIRCUITS AND SYSTEMS], IEEE, US, Bd. 2, 1. Januar 2003 (2003-01-01), Seiten 456-459, XP009130103 ISBN: 978-0-7803-7761-5**
• **BRAGA NETO ET AL.: "Automatic Target Detection and Tracking" JOPURNAL OF ELECTRONIC IMAGING, Bd. 13, Nr. 4, Oktober 2004 (2004-10), Seiten 802-813, XP040194722 SPIE, PO BOX 10 BELLINGHAM WA 98227-0010 USA**

EP 2 187 351 B1

- RAPTIS S N ET AL: "Growing region technique in the detection of autonomous structures within X-ray radiographs" NUCLEAR SCIENCE SYMPOSIUM, 1997. IEEE ALBUQUERQUE, NM, USA 9-15 NOV. 1997, NEW YORK, NY, USA,IEEE, US, Bd. 2, 9. November 1997 (1997-11-09), Seiten 1576-1580, XP010275734 ISBN: 978-0-7803-4258-3
- ANDREAS KULESCHOW AND KLAUS SPINNLER: "NEW METHODS FOR SEGMENTATION OF IMAGES CONSIDERING THE HUMAN VISION PRINCIPLES" COMPUTER VISION AND GRAPHICS: INTERNATIONAL CONFERENCE, ICCVG 2004,, 1. Januar 2006 (2006-01-01), Seiten 1037-1042, XP009129969
- DEL MASTIO A ET AL: "Virtual Restoration and Protection of Cultural Heritage Images" DIGITAL SIGNAL PROCESSING, 2007 15TH INTERNATIONAL CONFERENCE ON, IEEE, PI, 1. Juli 2007 (2007-07-01), Seiten 471-474, XP031125597 ISBN: 978-1-4244-0881-8
- TOMOYUKI YAMAGUCHI ET AL: "Automated Crack Detection for Concrete Surface Image Using Percolation Model and Edge Information" IEEE INDUSTRIAL ELECTRONICS, IECON 2006 - 32ND ANNUAL CONFERENCE ON, IEEE, PISCATAWAY, NJ, USA, 1. November 2006 (2006-11-01), Seiten 3355-3360, XP031077680 ISBN: 978-1-4244-0135-2

**Beschreibung**

Ausführungsbeispiele der Erfindung beziehen sich auf ein Verfahren zum Erkennen eines Objekts auf einem mittels Bildpunkten darstellbaren Bild.

Ausführungsbeispiele der Erfindung beziehen sich auf technische Gebiete der Bildverarbeitung, der Segmentierung, formgebender bzw. morphologischer Verarbeitungen, Oberflächeninspektion sowie adaptive Schwellwertbildung.

Eine Suche nach kratzerartigen (bzw. ritzartigen oder schrammenartigen) Defekten auf Oberflächen ist üblicherweise eine Aufgabe der industriellen Bildverarbeitung. Kratzerartige Objekte (Kratzer, Ritze, Schrammen, Sprünge, Risse, Spalten, Klüfte, usw.) haben oft kein festes Erscheinungsbild und zerfallen in eine Vielzahl von Fragmenten mit einer unterschiedlichen Breite und einem unterschiedlichen Kontrast. Um diese Objekte detektieren zu können und um ihre wirklichen Dimensionen kalkulieren zu können, ist es meist notwendig, ihre Fragmente aufzufinden und zu sammeln.

Dies kann beispielsweise mit Segmentierungsverfahren aus der digitalen Bildverarbeitung erreicht werden. Die Segmentierung ist ein Teilgebiet der digitalen Bildverarbeitung und des maschinellen Sehens. Die Erzeugung von inhaltlich zusammenhängenden Regionen durch Zusammenfassung benachbarter Pixel entsprechend einem bestimmten Homogenitätskriterium bezeichnet man als Segmentierung.

Es sind viele Verfahren zur automatischen Segmentierung bekannt. Grundsätzlich werden sie oft in pixel-, kanten- und regionen-orientierte Verfahren eingeteilt. Zusätzlich unterscheidet man modellbasierte Verfahren, bei denen man von einer bestimmten Form der Objekte ausgeht, und texturbasierte Verfahren, bei denen auch eine innere homogene Struktur der Objekte berücksichtigt wird. Die Grenzen zwischen den Verfahren sind oft fließend. Auch kann man verschiedene Verfahren kombinieren, um bessere Ergebnisse zu erzielen.

Pixelorientierte Verfahren treffen für jeden einzelnen Bildpunkt die Entscheidung, ob er zu einem bestimmten Segment gehört oder nicht. Diese Entscheidung kann beispielsweise durch die Umgebung beeinflusst sein. Das meist verbreitete Verfahren ist das Schwellwertverfahren. Kantenorientierte Verfahren suchen ein Bild nach Kanten oder Objektübergangen ab. Kanten liegen meist zwischen den Pixelregionen eines Bildes. Regionen-orientierte Verfahren betrachten Punktmengen als Gesamtheit und versuchen dadurch, zusammenhängende Objekte zu finden.

Eine Übersicht über die existierenden Segmentierungsverfahren ist detaillierter beschrieben unter "Kenneth R. Castleman: Digital Image Processing, Prentice-Hall, 1996, pp. 447-481" [1].

Beim Segmentieren von Abbildungen mit länglichen Objekten, besonders auf einem inhomogenen Hintergrund, zerfallen solche Objekte sehr oft in mehrere Fragmente. Um die Fragmente des Objektes zu vereinen, benutzt man z. B. bekannte morphologische Operationen, wie morphologisches Schließen ("Closing"), beispielsweise gemäß [1]. Ein solches Verfahren kann z.B. aus den folgenden Schritten bestehen:

1. Anfängliches Binarisieren der Abbildung mit einem bekannten Verfahren (globales Schwellwertbilden oder adaptives Schwellwertbilden).

2. Closing bzw. morphologisches Schließen, um die einzelnen Fragmente miteinander zu verbinden.

3. Auffinden und Beschreiben aller Erscheinungen miteinander verbundener markierter Pixel.

4. Analyse der gefundenen Objekte und Selektion der länglichen Objekte.

Dieses Verfahren kann auf einem komplizierten Hintergrund fehlerhaft sein, da bei dem morphologischem Schließen nur der Abstand zwischen markierten Pixel relevant ist, und falls beim anfänglichen Binarisieren durch den unruhigen Hintergrund eine große Menge der Erscheinungen markiert wird, können beim Schließen auch Objekte, die nicht zusammen gehören, vereint werden. Bei einem sehr kontrastreichen Hintergrund kann nach dem Schließen praktisch die ganze Oberfläche markiert werden.

Ein weiteres übliches Problem bei der industriellen Bildverarbeitung stellt die nicht-einheitliche Beleuchtung oder die nicht-einheitlichen Merkmale auf der Oberfläche selbst dar.

Ein Problem vieler Segmentierungsalgorithmen ist die Anfälligkeit für wechselnde Beleuchtung innerhalb des Bildes. Dies kann dazu führen, dass immer nur ein Bildteil korrekt segmentiert wird, in den anderen die Segmentierung aber unbrauchbar ist. Häufige Probleme sind beispielsweise Übersegmentierung, das heißt zu viele Segmente, und Untersegmentierung, das heißt zu wenige Segmente.

Für Anwendungen zur Oberflächeninspektion von störbehafteten, verrauschten Bildern, beispielsweise bei Bildern mit stark schwankender Helligkeit oder bei Bildern von spiegelnden Oberflächen, sind morphologische Öffnungs- bzw. Schließungsverfahren meist langsam und liefern ungenaue Ergebnisse aufgrund der fehlerhaften Detektionen der Segmentierung.

Eine Menge weiterer Verfahren, um längliche Objekte zu finden, wurden für die Gefäßsegmentierung in Retinabildern, das heißt Netzhautbildern entwickelt. In "X. Jiang, D. Mojon: "Adaptive Local Thresholding by Verification Based Multithreshold Probing with Application to Vessel Detection in Retinal Images, IEEE Trans. On Pattern Analysis and Machine Intelligence, Vol. 25, No. 1, 2003, pp. 131 - 137" [2] beispielsweise wird ein Verfahren zur Gefäßdetektion vorgestellt. Dieses auch als als "Verification based Multithreshold Probing" (überprüfungsbasierte Multischwellwertbildungsprüfmethode) bekannte Verfahren beinhaltet jedoch einen nicht ganz klar beschriebenen anwendungsspezifischen Algorithmus, der hoch komplex ist.

Das obige Verfahren ist sehr aufwendig bezüglich Rechenkomplexität und die Zeit zur Bestimmung der Ergebnisse ist sehr hoch. Beispielsweise ist die durchschnittliche Rechenzeit für ein Bild der Größe von 605 x 700 Pixels mit 8 bis 36 Sekunden pro Bild angegeben, abhängig von der gewählten Schwellwertschrittweite, wenn das Verfahren auf einem Pentium 3 Prozessor mit 600 MHz Taktrate abläuft. Somit ist dieses Verfahren wenig geeignet für den Einsatz bei industriellen Anwendungen, die Echtzeitforderungen an die Bildsegmentierung stellen.

Die Veröffentlichung von Jungfeng Ge et al.: "Adaptive Hysteresis Thresholding Based Pedestrian Detection in Nighttime Using a Normal Camera" bezieht sich auf eine Fußgängererfassung bei Dunkelheit unter Verwendung einer normalen Kamera basierend auf einer adaptiven Schwellwertbildung mit Hysterese. Dabei wird ein Segmentierungsalgorithmus basierend auf einer adaptiven Hysterese mit zwei adaptiven Schwellen vorgeschlagen. So wird zunächst eine untere Schwelle unter Verwendung des Mittelwerts eines lokalen Bereichs bei der Bildsegmentierung verwendet. Die obere Schwelle wird, nach der Bestimmung der unteren Schwelle, entweder basierend auf einer eigenen Vorgehensweise oder durch eine Anpassung der unteren Schwelle ermittelt. Daraufhin wird nun für ein vorgegebenes Pixel in einem Frame angenommen, dass dieses den unmittelbaren Vordergrund darstellt, falls sich der Pixelwert oberhalb der oberen Schwelle befindet. Falls sich nun der Pixelwert unterhalb der unteren Schwelle befindet, wird das Pixel uneingeschränkt als Hintergrund betrachtet. Falls sich der Pixelwert zwischen den beiden Schwellen befindet, dann wird dieses auf einen Null-Wert gesetzt, es sei denn dessen vorhergehendes Pixel in der gleichen Reihe ist als Vordergrund segmentiert. Die Abtastrichtung der Pixel für die Segmentierung in einem Frame verläuft von oben nach unten und von links nach rechts.

Die Veröffentlichung von Banhart (Ed.) Ohser, Schladitz: "Advanced Tomographic Methods in Materials Research and Engineering" bezieht sich auf eine Visualisierung, Verarbeitung und Analyse von tomographischen Daten. Darin wird eine Hysterese (doppelte Schwellwertbildung) als Segmentierungsverfahren vorgeschlagen, wobei die Hysterese-Schwellwertbildung zwei Schwellen $t_1$, $t_2$ mit $t_1 \geq t_2$ verwendet und von einem Pixel mit einem Pixelwert oberhalb der ersten Schwelle $t_1$ beginnt. Daraufhin werden alle Pixel, die einem bereits identifizierten Vordergrund-Pixel benachbart sind und auch noch oberhalb der zweiten Schwelle liegen, dem Vordergrund zugeordnet. Diese Vorgehensweise soll eine Segmentierung von verbundenen Bildsegmenten sicherstellen, da lediglich eindeutige Vordergrundelemente entsprechend der hohen Schwelle $t_1$ ausgewählt werden, während deren Nachbarn einen niedrigeren Wert aufweisen kann. Gleichzeitig sollen Rausch-Pixel durch den höheren Schwellwert $t_1$ unterdrückt werden. Bei dem dargestellten Region-Growing-Algorithmus werden alle Pixel, die zu einem Objekt oder Bildsegment gehören, verbunden. Ausgehend von einigen Ausgangspixeln (seed pixels) werden Regionen vergrößert (grown), in denen überprüft wird, ob benachbarte Pixel ein Homogenitätskriterium erfüllen. Dabei ist ein einfaches Region-Growing-Kriterium auf der Beobachtung basiert, dass die Grauwerte eines Objekts sich üblicherweise innerhalb eines Bereichs um einen Mittelwert befinden. Während einer Bereichserweiterung (Region-Growing) wird dessen momentaner Mittelwert und Standardabweichung berechnet und ein neues Pixel wird hinzugefügt, falls dessen Wert nicht zu weit von dem Mittelwert der Region abweicht. Dabei wird zunächst ein Satz von eindeutigen Vordergrund-Pixeln als Ausgangspixel (seeds) definiert. Daraufhin wird eine Region R als der Satz, der aus einem der Ausgangs-Pixel besteht, initialisiert, woraufhin alle benachbarten Pixel der Region R überprüft werden, ob sie eine vorgegebene Bedingung erfüllen, und falls diese Bedingung erfüllt ist, werden diese Pixel zu der Region hinzugefügt. Diese Vorgehensweise wird wiederholt, bis die Region nicht länger anwächst.

Die Veröffentlichung von Soille, Pierre: Morphological Image Analysis" bezieht sich auf geodäsische Transformationen, wobei eine Doppelschwelle angegeben ist, so dass der Doppelschwellen-Operator DBLT bei der Schwellwertbildung bezüglich des Eingangsbildes zwei Bereiche von Graustufenwerten erzeugt, wobei einer der Bereiche in dem anderen Bereich enthalten ist. Die Schwelle für den schmaleren Bereich wird daraufhin als Ausgangspunkt (seed) für die Rekonstruktion der Schwelle für den weiten Bereich verwendet. Damit soll das resultierende binäre Bild deutlicher sein als dasjenige, das mit einer einzigen Schwelle erhalten wird.

Bei einem Region-Growing-Algorithmus werden mehrmalige Umrechnungen von lokalen Schwellwerten an einer gleichen Stelle benötigt, was einen erhöhten Rechenaufwand erfordert. Sowohl bei einem Hysteresis-Thresholding-Vorgang als auch bei einer geodäsischen Transformation werden alle Pixel, deren Helligkeit eine kontrastreiche Schwelle übersteigt (bzw. unterschreitet, falls das Objekt dunkel ist), uneingeschränkt den Objekten zugewiesen. Dies kann jedoch bei starken Störungen im Bild bzw. einem sehr unruhigen Hintergrund leicht zu Fehlern und Verzerrungen der Objekte und zum Erzeugen von Artefakten führen.

Aus den Unzulänglichkeiten der beschriebenen Verfahren, im Echtzeiteinsatz in der industriellen Bildverarbeitung eine qualitativ und quantitativ hochwertige Objekterkennung zu liefern, stellt sich die Aufgabe der vorliegenden Erfindung. Diese Aufgabe besteht darin, eine schnelle und zuverlässige Auffindung von länglichen oder linienartigen Objekten bereitzustellen.

Die Aufgabe wird gelöst durch ein Verfahren zum Erkennen eines Objekts auf einem mittels Bildpunkten darstellbaren Bild, gemäß Anspruch 1 oder durch eine Vorrichtung zum Erkennen eines Objekts auf einem mittels Bildpunkte darstellbaren Bild, gemäß Anspruch 16.

Das Verfahren weist die in Anspruch 1 definierten Schritte auf.

Die Vorrichtung weist die in Anspruch 16 definierten Merkmale auf.

Ausführungsbeispiele der Erfindung liefern ein beschleunigtes logisch morphologisches Verfahren, um längliche, linienförmige oder anders geformte Objekte auf störbehafteten Oberflächen zu detektieren, wobei das Verfahren auf den Prinzipien der menschlichen visuellen Wahrnehmung beruht und adaptive Schwellwertbildung und logisch morphologische Operationen umfasst, um Fragmente der Objekte zu verschmelzen.

Mit der Nutzung von Methoden der menschlichen visuellen Wahrnehmung bilden Ausführungsbeispiele der Erfindung diejenigen Schritte der Bildsegmentierung nach, die im menschlichen Gehirn bei der Wahrnehmung von Objekten ablaufen, so dass eine hohe Genauigkeit bei der Detektion erzielt wird.

Ausführungsbeispiele der Erfindung erlauben eine sehr schnelle Detektion von insbesondere länglichen Objekten, beispielsweise Kratzern, Ritzen, Schrammen, Spalten auf störbehafteten Oberflächen und erreichen dabei eine bemerkbar höhere Geschwindigkeit als übliche Verfahren, die ein morphologisches Schließen anwenden. Allerdings ist die Detektion nicht nur auf längliche oder linienförmige Objekte begrenzt, wie beispielsweise auch Blutgefäße oder Chromosomen, es können auch anders geformte Objekte erfasst werden, wie z.B. Unregelmäßigkeiten oder Fehler auf zu untersuchenden Oberflächen.

Dabei ist die Komplexität des erfindungsgemäßen Verfahrens so gering, dass sie auf einem kommerziell verfügbaren Prozessor implementiert werden kann, um in Echtzeit ein Bildsegmentierungsverfahren zu implementieren, um beispielsweise längliche oder linienartige Objekte zu erkennen. Ein längliches oder linienartiges Objekt definiert sich dabei beispielsweise durch das Vorhandensein einer Hauptlängsachse, entlang welcher zu dem Objekt zugehörige Bildpunkte (regelmäßig oder unregelmäßig) zentriert sind. Dabei ist eine Häufigkeit, mit der zu dem Objekt gehörige Bildpunkte auftreten, im Bereich der Hauptlängsachse signifikant höher als in Bereichen außerhalb dieser Achse.

Die Qualität der Detektion, insbesondere auf verrauschten Oberflächenbildern, und die Robustheit des erfindungsgemäßen Verfahrens sind besser als herkömmliche, beispielsweise unter [1] beschriebene morphologische Schließungsverfahren. Die Rechengeschwindigkeit des Verfahrens gemäß Ausführungsbeispielen der Erfindung ist bedeutend höher als die Rechengeschwindigkeit von üblichen morphologischen Schließungsverfahren, beispielsweise gemäß [1] oder [2].

Ausführungsbeispiele der Erfindung lassen sich erfolgreich auf dem Gebiet der industriellen Bildverarbeitung einsetzen und erzielen dabei bei kontinuierlicher Durchlaufrate hohe Detektionsraten im Echtzeiteinsatz. Die Rechenzeiten liegen dabei signifikant unterhalb der Rechenzeiten von herkömmlichen Objekterkennungsverfahren bei Erkennungsraten nahe 100 %.

Bezugnehmend auf die beiliegenden Figuren 1 bis 9 werden nachfolgend Ausführungsbeispiele der vorliegenden Erfindung näher erläutert. Es zeigen:

Fig. 1          ein Blockschaltbild eines Verfahrens zum Erkennen eines Objekts gemäß einem Ausführungsbeispiel der Erfindung;

Fig. 2          ein Blockschaltbild eines Verfahrens zum Erkennen eines Objekts gemäß einem weiteren Ausführungsbeispiel der Erfindung;

Fig.           3a-d eine schematische Darstellung mittels eines Pi- xeldiagrammes zu einem Verfahrens zum Erkennen eines Objekts gemäß einem Ausführungsbeispiel der Erfindung;

Fig. 4a          ein Bild eines kratzerartigen Objekts im Origi- nal;

Fig. 4b          das Bild gemäß Fig. 4a nach einem anfänglichen Segmentierungsschritt;

Fig. 4c          das Bild gemäß Fig. 4a nach einem letzten Segmen- tierungsschritt eines Verfahrens gemäß einem Aus- führungsbeispiel der Erfindung;

Fig. 4d          das Bild gemäß Fig. 4a nach einem letzten Segmen- tierungsschritt eines herkömmlichen Verfahrens zum morphologischen Schließen mit einem modifi- zierten Erosionsschritt;

Fig. 4e          das Bild gemäß Fig. 4a nach einem letzten Segmen- tierungsschritt eines herkömmlichen Verfahrens zum morphologischen Schließen gemäß einer Prog- rammbibliothek;

Fig. 5a      ein Bild eines haarrißförmigen Objekts im Origi- nal;

Fig. 5b      das Bild gemäß Fig. 5a nach einem letzten Segmen- tierungsschritt eines Verfahrens gemäß einem Aus- führungsbeispiel der Erfindung;

Fig. 5c      das Bild gemäß Fig. 5a nach einem letzten Segmen- tierungsschritt eines herkömmlichen Verfahrens zum morphologischen Schließen mit einem modifi- zierten Erosionsschritt;

Fig. 5d      das Bild gemäß Fig. 5a nach einem letzten Segmen- tierungsschritt eines herkömmlichen Verfahrens zum morphologischen Schließen gemäß einer Prog- rammbibliothek;

Fig. 6a-c eine      schematische Darstellung mittels eines Pi- xeldiagramms zu einem Verfahrens zum Erkennen ei- nes Objekts gemäß einem weiteren Ausführungsbei- spiel der Erfindung;

Fig. 7a-d eine      schematische Darstellung mittels eines Pi- xeldiagramms zu einem Verfahrens zum Erkennen ei- nes Objekts gemäß einem weiteren Ausführungsbei- spiel der Erfindung;

Fig. 8a-c eine      schematische Darstellung mittels eines Pi- xeldiagramms zu einem Verfahren zum Erkennen ei- nes Objekts gemäß einem Closing-Verfahren; und

Fig. 9a-d eine      schematische Darstellung mittels eines Pi- xeldiagramms zu einem Verfahren zum Erkennen ei- nes Objekts gemäß einem weiteren Ausführungsbei- spiel der Erfindung.

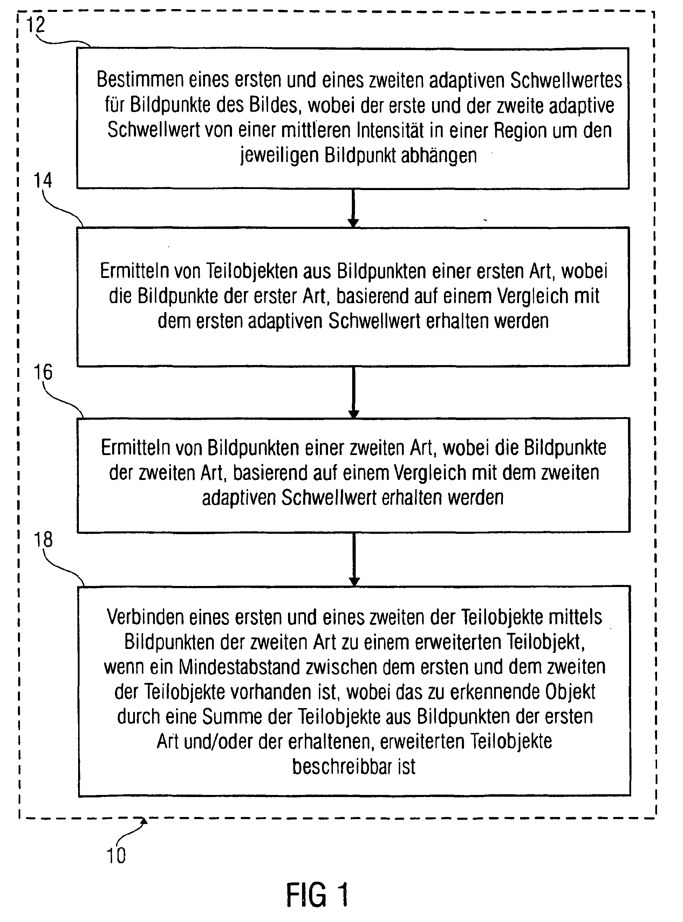

Fig. 1 zeigt ein Blockschaltbild eines Verfahrens zum Erkennen eines Objekts gemäß einem Ausführungsbei- spiel der Erfindung. Das Verfahren 10 umfasst einen ersten Schritt 12 "Bestimmen eines ersten und eines zweiten adaptiven Schwellwerts für Bildpunkte des Bildes, wobei der erste und der zweite adaptive Schwellwert von einer mittleren Intensität in einer Region um den jeweiligen Bildpunkt abhängen". Das Verfahren 10 umfasst ferner einen zweiten Schritt 14 "Ermitteln von Teilobjekten aus Bildpunkten einer ersten Art, wobei die Bildpunkte der ersten Art, basierend auf einem Vergleich mit dem ersten adaptiven Schwellwert erhalten werden". Das Verfahren 10 umfasst einen dritten Schritt 16 "Ermitteln von Bildpunkten einer zweiten Art, wobei die Bildpunkte der zweiten Art, basierend auf einem Vergleich mit dem zweiten adaptiven Schwellwert erhalten werden". Das Verfahren 10 umfasst ferner einen vierten Schritt 18 "Verbinden eines ersten und eines zweiten der Teilobjekte mittels Bildpunkten der zweiten Art zu einem erweiterten Teilobjekt, wenn ein Mindestabstand zwischen dem ersten und dem zweiten der Teilobjekte vorhanden ist, wobei das zu erkennende Objekt durch eine Summe der Teilobjekte aus Bildpunkten der ersten Art und/oder der erhaltenen, erweiterten Teilobjekte beschreibbar ist".

Dabei werden alle Teilobjekte einheitlich bearbeitet. Das zu erkennende Objekt kann beispielsweise Teilobjekte der ersten Art umfassen. Das zu erkennende Objekt kann beispielsweise erweiterte Teilobjekte umfassen (d.h. Teilobjekte aus Bildpunkten der ersten Art, die mittels Bildpunkten der zweiten Art zu erweiterten Teilobjekten erweitert wurden). Das zu erkennende Objekt kann beispielsweise Teilobjekte aus Bildpunkten der ersten Art und erweiterte Teilobjekte umfassen, d.h. Kombinationen aus Teilobjekten und erweiterten Teilobjekten. Das zu erkennende Objekt besteht dagegen nicht ausschließlich aus Bildpunkten der zweiten Art.

In dem zu erkennenden Objekt können Bildpunkte der zweiten Art, die zum Verbinden der Teilobjekte aus Bildpunkten der ersten Art genutzt wurden, entfernt oder ausgeblendet werden. Beispielsweise kann um die erweiterten Teilobjekte ein Umrandungsrahmen gesetzt werden, um das zu erkennende Objekt darzustellen.

Das Verbinden eines ersten und eines zweiten der Teilobjekte mittels Bildpunkten der zweiten Art ist im Sinne von "unter Beteiligung von" Bildpunkten der zweiten Art zu verstehen. Das heißt, das Verbinden kann auch unter Beteiligung von Bildpunkten der ersten Art (oder von Kombinationen aus Bildpunkten der ersten und der zweiten Art) erfolgen.

Ferner können sich weitere, in Fig. 1 nicht gezeigte Schritte an das Verfahren anschließen, um Bereiche zu löschen, die weniger als eine vorgebbare Anzahl an Bildpunkten umfassen, oder die eine geometrische Form aufweisen, die von einer vorgebbaren geometrischen Form abweicht. Beispielsweise kann die vorgebbare geometrische Form ein längliches Objekt spezifizieren, so dass rissartige, kratzerartige, schrammenartige oder auch blutgefäßartige Objekte in diese vorgebbare geometrische Form hineinpassen, während Fragmente, die andersartig geformt sind, beispielsweise ein Spiegelbild der Beleuchtungsquelle auf dem Bild, oder Objekte deren Größe eine vorgebbare Schwelle überschreitet, nicht der geometrischen Form entsprechen und somit gelöscht werden.

Die binäre Bilddatenverarbeitung bietet ein einfaches Verfahren, um binären Bildern zwei Graustufen (bzw. schwarz und weiß) zuzuordnen. Dabei resultiert ein binäres Bild aus einer Bildsegmentierungsoperation, um die Graustufen des Bildes in die zwei Graustufen des Binärbildes abzubilden. Falls die ursprüngliche Segmentierung nicht zufriedenstellend ist, gibt es Möglichkeiten der Vor- und Nachverarbeitung des Binärbildes, um die Verarbeitung zu verbessern. Der Prozess der Bildsegmentierung kann als ein Prozess bezeichnet werden, der Teile eines digitalen Bildes in disjunkte, das heißt, nicht überlappende Regionen unterteilt. Eine Region ist dabei ein zusammenhängender Bereich von Bildpixeln oder Bildpunkten, das heißt, ein Bereich, in dem alle Pixel benachbart sind oder sich berühren. Das heißt, zwischen zwei Pixeln in einem verbundenen Bereich existiert ein zusammmenhängender Pfad vollständig innerhalb des Bereichs, wobei ein zusammenhängender Pfad ein solcher ist, der sich immer zwischen benachbarten Pixeln bewegt. Somit kann man in einem zusammenhängenden Bereich einen zusammenhängenden Pfad zwischen zwei beliebigen Pixeln des zusammenhängenden Bereichs folgen, ohne jemals den Bereich zu verlassen.

Das Bild kann beispielsweise als eine Matrix von Pixeln aufgefasst werden, wobei einem Pixel eine 0 oder eine 1 zuordenbar ist, so dass beispielsweise eine 0 einem weißen Farbpunkt und eine 1 einem schwarzem Farbpunkt entspricht.

Somit kann das Bild als ein Raster aus Bildpunkten dargestellt werden, wobei jeder Bildpunkt durch seine kartesischen Koordinaten (x,y) darstellbar ist. Alternativ können natürlich auch andere Koordinatensysteme genutzt werden, beispielsweise Polarkoordinaten. Die Bildpunkte können eine unterschiedliche Intensität aufweisen; beispielsweise kann auf einer Skala von 0 bis 255 jede abzählbare Zahl einer Intensität zugeordnet sein.

Die adaptive Schwellwertbildung gemäß dem ersten Schritt 12 des Verfahrens 10 ist ein schnelles und effizientes Verfahren, um nachteiligen Effekten der nicht-einheitlichen Beleuchtung des Objekts oder nicht-einheitlichen Merkmalen auf der Objektoberfläche entgegenzuwirken. Dabei wird der Schwellwert für die Segmentierung durch ein adaptives Schwellwertverfahren für den zu interessierenden Punkt aus den lokalen Merkmalen des Umgebungsbildes berechnet.

Die Schwellwertverfahren sind eine Gruppe von Algorithmen zur Segmentierung digitaler Bilder. Mit Hilfe von Schwellwertverfahren kann man in einfachen Situationen entscheiden, welche Bildpunkte gesuchte Objekte darstellen und welche deren Umgebung angehören. Schwellwertverfahren führen meist zu Binärbildern.

Eine Motivation für die Verwendung von Binärbildern ist die Verfügbarkeit schneller Binärbildalgorithmen, z. B. zur Blobanalyse ("Blob" = Farbklecks, Farbpunkt). Die Speicherplatzersparnis spielt in Bildverarbeitungsanwendungen meist eine geringere Rolle. Wie bei den meisten Segmentierungsverfahren werden auch bei den Schwellwertverfahren Bildpunkte, die sogenannten Pixel, verschiedenen Gruppen, den sogenannten Segmenten, zugeordnet. Das zu segmentierende Bild liegt dabei in Form von Zahlenwerten, meist ein oder mehrere Farbwerte oder Graustufenwerte pro Pixel, vor. Die Zugehörigkeit eines Pixels zu einem Segment wird durch den Vergleich des Graustufenwertes oder eines anderen eindimensionalen Merkmals mit einem Schwellwert entschieden. Der Graustufenwert oder Grauwert eines Pixels ist sein Helligkeitswert. Da diese Operation für jedes Pixel unabhängig angewendet wird, ist das Schwellwertverfahren ein pixelorientiertes Segmentierungsverfahren. Das Schwellwertverfahren lässt sich aufgrund seiner Einfachheit schnell implementieren und Segmentierungsergebnisse können mit geringem Aufwand berechnet werden.

Das Schwellwertverfahren binarisiert ein Ausgangsbild, das heißt, es werden genau zwei Segmente gebildet, im wohl häufigsten Anwendungsfall für dieses Verfahren zum Einen der Hintergrund und zum Anderen die gesuchten Objekte. Die Zuordnung zu den beiden Segmenten, das heißt, beispielsweise Null oder Eins, erfolgt aufgrund eines Vergleiches des Grauwerts des betrachteten Pixels mit dem zuvor festgelegten Schwellwert. Das Ergebnisbild lässt sich also mit sehr geringem Rechenaufwand berechnen, da pro Pixel nur eine einfache Vergleichsoperation durchgeführt werden braucht.

Bei dem Schwellwertverfahren kann jedem Pixel ein Segment zugeordnet werden. Im Gegensatz zu vielen anderen Segmentierungsverfahren braucht das Schwellwertverfahren keine zusammenhängenden Segmente zu bilden. Es ist durchaus vorstellbar und oft auch gewollt, dass mehrere räumlich getrennte Objekte im Bild, die einen ähnlichen Helligkeitswert aufweisen, zu einem Segment zusammengefasst werden. Die Größe der segmentierten Objekten kann je nach Wahl des Schwellwertes stark schwanken.

Bei dem adaptiven Schwellwertverfahren wird für jedes Pixel eine Nachbarschaft N betrachtet und auf Basis dieser Nachbarschaft ein passender Schwellwert t(N) berechnet. Hierbei kann ein automatisches Verfahren zur Wahl des Schwellwertes eingesetzt werden. Die entsprechende Berechnungsvorschrift für jedes Pixel (x,y) lautet:

$$\mathrm{T_{adaptiv}(x,y)} \quad = \quad \begin{array}{ll} 0 & \textit{falls} \quad g(x,y) < t(N(x,y)) \\ 1 & \textit{falls} \quad g(x,y) \geq t(N(x,y)) \end{array}$$

Das Verfahren ist äußerst stabil gegenüber lokalen Helligkeitsänderungen. Der Rechenaufwand ist im Vergleich zu einem globalen Schwellwertverfahren, das jedem Bildpunkt eine globale Schwelle zuordnet, nur leicht höher, da für jeden Bildpunkt ein neuer Schwellwert berechnet wird.

In dem ersten Schritt 12 wird für Bildpunkte des Bildes, das heißt, für alle oder einen Teil der Bildpunkte, ein erster und ein zweiter adaptiver Schwellwert bestimmt. Diese beiden Schwellwerte hängen von einer mittleren Intensität in einer Region um den jeweiligen Bildpunkt ab. Die mittlere Intensität, $\bar{I}(x,y)$ eines Bildpunktes mit den kartesischen Koordinaten x und y kann in der Region um den Bildpunkt (x,y) beispielsweise mittels der folgenden Beziehung bestimmen werden:

$$\bar{I}(x,y) = \frac{1}{N_{MN}} \sum_{m=-M}^{m=M} \sum_{n=-N}^{n=N} I(x-m, y-m),$$

wobei die Region hier durch die beiden Summationsgrenzen M und N festgelegt ist und ein Gewichtungsfaktor $N_{MN}$ eine zusätzliche Gewichtung der Region, z.B. eine Normierung durch die Fläche der Region, veranlasst.

Die zwei adaptiven Schwellwerte können zusätzlich von einem Kontrastfaktor C abhängen, beispielsweise über die Beziehung:

$$T(x,y) = C\,\bar{I}(x,y).$$

Wählt man für den ersten adaptiven Schwellwert einen größeren Kontrastfaktor $C_1$ als einen Kontrastfaktor $C_2$ für den zweiten adaptiven Schwellwert, so kann man den ersten adaptiven Schwellwert $T_1(x,y)$ mittels der Beziehung

$$T_1(x,y) = C_1\,\bar{I}(x,y)$$

bestimmen und den zweiten adaptiven Schwellwert $T_2(x,y)$ mittels der Beziehung

$$T_2(x,y) = C_2\,\bar{I}(x,y).$$

Durch die Wahl eines adaptiven Schwellwerts wird für jeden Bildpunkt des Bildes eine individuelle Schwelle bestimmt, die von der mittleren Intensität $\bar{I}(x,y)$ um den Bildpunkt (x,y) und einem Kontrastfaktor abhängig ist. Überschreitet die Intensität des Bildpunkts (x,y) den für diesen Bildpunkt individuell berechneten Schwellwert, so wird diesem Bildpunkt, beispielsweise auf einem Ausgangsbild, ein Pixel zugeordnet. Unterschreitet die Intensität dieses Bildpunktes (x,y) den für diesen Bildpunkt bestimmten adaptiven Schwellwert, so wird auf dem beispielsweise Ausgangsbild kein Pixel dargestellt.

Man erhält bei zwei adaptiven Schwellwerten also beispielsweise zwei Ausgangsbilder, von denen ein erstes Ausgangsbild alle Pixel darstellt, die Bildpunkten des Originalbildes zugeordnet sind, bei denen die Intensität den ersten adaptiven Schwellwert überschreitet, während auf einem zweiten Ausgangsbild alle Pixel dargestellt sind, die Bildpunkten des Originalbildes zugeordnet sind, bei denen die Intensität den zweiten adaptiven Schwellwert überschreitet.

Statt eines Überschreitens des adaptiven Schwellwerts kann auch ein Unterschreiten des adaptiven Schwellwerts dargestellt werden. Dies würde zu einem invertierten Ausgangsbild führen, gegenüber dem zuvor erwähnten Ausgangsbild.

In dem zweiten Schritt 14 des Verfahrens 10 werden Teilobjekte aus Bildpunkten einer ersten Art ermittelt, wobei die Bildpunkte der ersten Art, basierend auf einem Vergleich mit dem ersten adaptiven Schwellwert erhalten werden. Beispielsweise können alle Bildpunkte, deren Intensität den ersten adaptiven Schwellwert überschreitet, den Bildpunkten der ersten Art zugeordnet werden.

Im dritten Schritt 16 wird ein Vergleich der Intensität der Bildpunkte mit dem zweiten adaptiven Schwellwert ausgeführt und Bildpunkte, deren Intensität den zweiten adaptiven Schwellwert überschreitet, Bildpunkten einer zweiten Art zugeordnet. Dabei kann es auftreten, dass Bildpunkte, deren Intensität den ersten adaptiven Schwellwert übersteigt, wenn dieser erste adaptive Schwellwert größer ist als der zweite adaptive Schwellwert, auch den Bildpunkten der zweiten Art zugeordnet werden. In diesem Fall ist es vorteilhaft, die Bildpunkte, deren Intensität den höheren bzw. kontrastreicheren adaptiven Schwellwert übersteigt, den Bildpunkten der ersten Art zuzuordnen und die Bildpunkte, deren Intensität zwischen dem zweiten adaptiven Schwellwert und dem ersten adaptivem Schwellwert liegt, den Bildpunkten der zweiten Art zuzuordnen.

Andere Bildpunkte, deren Intensität weder den ersten noch den zweiten adaptiven Schwellwert übersteigt, werden nicht den Bildpunkten der ersten Art und nicht den Bildpunkten der zweiten Art zugeordnet.

Allgemein ist das Verfahren nicht auf eine Anzahl von zwei adaptiven Schwellwerten begrenzt. Es lässt sich auch auf eine Mehrzahl von adaptiven Schwellwerten anwenden. Beispielsweise lassen sich adaptive Schwellwerte nach folgender Beziehung bestimmen:

$$T_i(x,y) = C_i \, \overline{I}(x,y),$$

wobei sich adaptive Schwellen $T_i(x,y)$ mittels verschiedener Kontrastfaktoren $C_i$ aus der mittleren Intensität $\overline{I}(x,y)$ um den jeweiligen Bildpunkt $(x,y)$ bestimmen lassen. Der zweite Schritt 14 kann beispielsweise Teilobjekte aus Bildpunkten einer i-ten Art ermitteln, wobei die Bildpunkte der i-ten Art basierend auf einem Vergleich mit dem i-ten adaptiven Schwellwert erhalten werden. Die Bildpunkte einer j-ten Art können basierend auf einem Vergleich mit dem j-ten adaptiven Schwellwert erhalten werden. Dabei kann sich j von i unterscheiden, beispielsweise größer sein als i.

Beispielsweise können zwei Teilobjekte einer ersten Art erst mit Bildpunkten einer zweiten Art verbunden werden, danach sukzessive mit Bildpunkten einer dritten Art, einer vierten Art usw., wenn mit den Bildpunkten der ersten Art eine kontrastreiche Beschreibung erfolgt, und mit den Bildpunkten der zweiten, dritten, vierten, usw. Art absteigend kontrastärmere Beschreibungen. Dies kann in einem einzigen Dehnungsschritt sukzessive erfolgen. Alternativ kann in jedem weiteren Dehnungsschritt eine Verbindung der Teilobjekte mit Bildpunkten einer niedrigeren Art ausgeführt werden. Eine Schranke kann in beiden Fällen angeben, auf Bildpunkte welcher Art die Dehnung angewendet werden soll.

Im Rahmen der Erfindung können bezüglich Konnektivität oder Nachbarschaft zwei Regeln angegeben werden, die diese beschreiben. Falls nur lateral zusammenhängende Pixel, das heißt, oben, unten, rechts, links als zusammenhängend betrachtet werden, ist dies eine Vierer-Konnektivität bzw. eine Vierer-Nachbarschaft und die Objekte sind vierfach zusammenhängend. Das heißt, jeder Pixel hat (mindestens) vier Nachbarn, mit denen er verbunden werden kann. Falls zusätzlich diagonal benachbarte bzw. 45° benachbarte Pixel als zusammenhängend betrachtet werden, spricht man von einer Achter-Konnektivität bzw. einer Achter-Nachbarschaft und die Objekte werden als achtfach verbunden bezeichnet. Jeder Pixel hat dann acht Nachbarn, mit denen er verbunden werden kann. Für die Verfahren zur Bildverarbeitung wird meist eine der beiden Konnektivitätsregeln verwendet und konsistent beibehalten. Oft liegt eine Achter-Konnektivität näher an den Ergebnissen der menschlichen Sinneswahrnehmung.

In der binären Bildverarbeitung betrachtet die Vierer-Konnektivität nur vertikal oder horizontal gegenüberliegende Pixel als benachbart, während die Achter-Konnektivität die acht nächsten Pixel eines Pixels als Nachbarn betrachtet. Für viele Anwendungen ist es vorteilhafter, die Achter-Konnektivität zu betrachten.

Ferner werden in dem zweiten Schritt 14 Teilobjekte aus den Bildpunkten der ersten Art ermittelt. Dies kann beispielsweise mittels eines Blobauffindungsprozesses ("Blobfinder") ausgeführt werden, wobei die Bildpunkte der ersten Art mittels einer Vierer-Nachbarschaftsregel bzw. einer Vierer-Konnektivität durchsucht werden, um zusammenhängende Bereiche zu finden. Eine Vierer-Nachbarschaft bzw. eine Vierer-Konnektivität liegt dabei vor, wenn ein Bildpunkt der ersten Art vertikal oder horizontal an einen zweiten Bildpunkt der ersten Art angrenzt.

Die so ermittelten zusammenhängenden Bereiche, auch Blobs bezeichnet, bilden dann die Teilobjekte. Ferner können vor der Weiterverarbeitung bereits alle Bildpunkte der ersten Art unberücksichtigt bleiben, die keine Teilobjekte formen, da sie keine Nachbarn haben, oder die Teilobjekte formen, die eine vorgegebene Größe unterschreiten. Dies kann beispielsweise mit der Untersuchung nach der Vierer-Nachbarschaftsregel bzw. Vierer-Konnektivität bestimmt werden. Damit ist es möglich, die weitere Verarbeitung auf interessierende Bereiche zu beschränken, die eine gewisse Größe aufweisen und so nicht aufgrund von Störeffekten entstanden sind.

Nach Durchlauf der ersten drei Schritte 12, 14, 16 hat man beispielsweise in einem Ausgangsbild Teilobjekte aus Bildpunkten der ersten Art erzeugt, deren Intensität den ersten adaptiven Schwellwert überschreitet, die somit beispielsweise Bildpunkte hoher Bildintensität sind. Um diese Teilobjekte herum und über das gesamte Bild verteilt, befinden sich die Bildpunkte der zweiten Art, deren Intensität den zweiten adaptiven Schwellwert überschreitet, gleichzeitig aber nicht so hoch ist, dass sie den Bildpunkten der ersten Art zugerechnet werden können. Weiterhin können über das Bild verteilt Bildpunkte auftreten, die weder der ersten Art noch der zweiten Art zugeordnet sind, das heißt, deren Intensität unterhalb des zweiten adaptiven Schwellwerts liegt und die somit eine geringere Intensität aufweisen.

Im Rahmen der Erfindung können morphologische oder formgebende Bildverarbeitungsverfahren auf die Bildverarbeitung von binären Bildern angewendet werden.

Durch die Klassifikation der Bildpunkte in Bildpunkte der ersten Art, Bildpunkte der zweiten Art und Bildpunkte keiner Art wird eine effiziente Objekterkennung ermöglicht. Die Idee hierbei ist, die Teilobjekte aus den Bildpunkten der ersten Art mit anderen Teilobjekten aus Bildpunkten der ersten Art zusammenwachsen zu lassen, in der Weise, dass für diesen Prozess nur Bildpunkte der zweiten Art verwendet werden. Die kontrastreichen Teilobjekte können so mittels Bildbereichen des Bildes, die einen geringeren Kontrast aufweisen, verschmolzen werden. Man geht dabei von der Annahme aus, dass ein zusammenhängendes Teilobjekt dadurch charakterisiert ist, dass die zusammenhängenden Bereiche einen gewissen Mindestkontrast aufweisen, während getrennte Teilobjekte durchaus nahe beieinander liegen können, jedoch im Grenzbereich eine signifikant schwächere Intensität aufweisen, als in einem Bereich in dem die Teilobjekte zusammenhängen.

Dieses Prinzip wird mit dem vierten Schritt 18 des Verfahrens 10 verdeutlicht, in dem ein erstes und ein zweites der Teilobjekte mittels Bildpunkten der zweiten Art zu einem erweiterten Teilobjekt verbunden werden, wenn ein Mindestabstand zwischen dem ersten und dem zweiten der Teilobjekte vorhanden ist, wobei das zu erkennende Objekt durch eine Summe der Teilobjekte aus Bildpunkten der ersten Art und/oder der erhaltenen, erweiterten Teilobjekte beschreibbar ist. Das heißt, die im zweiten Schritt 14 ermittelten Teilobjekte werden mittels der im dritten Schritt 16 ermittelten Bildpunkte der zweiten Art verbunden, wenn ein Mindestabstand zwischen den beiden Teilobjekten vorhanden ist. Der Mindestabstand kann dabei eine Schrittweite eines morphologischen Dehnungsprozesses bezeichnen.

Beispielsweise ist der vierte Schritt 18 des Verfahrens 10 dadurch realisierbar, dass ein Teilobjekt zu einem erweiterten Teilobjekt verbunden wird, indem die benachbarten Pixel des Teilobjekts, die Bildpunkte der zweiten Art entsprechen, mit in das Teilobjekt einbezogen werden. Das Teilobjekt wächst somit um die benachbarten Bildpunkte der zweiten Art.

Hier ist es möglich, benachbarte Bildpunkte mittels einer Achter-Nachbarschaftsregel (bzw. Achter-Konnektivität) oder einer Vierer-Nachbarschaftsregel (bzw. Vierer-Konnektivität) zu bestimmen. Das heißt, zu jedem Randpunkt des Teilobjekts wird mittels einer Vierer- oder Achter-Nachbarschaftsregel überprüft, ob ein benachbarter Bildpunkt der zweiten Art existiert, um den das Teilobjekt vergrößert werden kann. Dieser Prozess kann für mehrere oder alle Teilobjekte des Bildes durchgeführt werden, wobei jedes Teilobjekt, das um die benachbarten Bildpunkte der zweiten Art vergrößert wurde, erneut vergrößert werden kann, und zwar um die Bildpunkte der zweiten Art, die dem vergrößerten Teilobjekt benachbart sind.

Ein solcher iterativer Prozess (bzw. ein sukzessives Erweitern) führt zu einem Wachstum der Teilobjekte und kann beispielsweise solange ausgeführt werden, bis der Mindestabstand oder eine vorgegebene Iterationsschrittweite erreicht ist. Als Abbruchkriterium können auch eine maximale Anzahl angeschlossener Teilobjekte oder eine vorgegebene Reichweite der Erweiterung (beispielsweise in Anzahl an Pixel oder einer Längeneinheit) angegeben werden. Führt dieser Prozess dazu, dass zwei Teilobjekte mittels der erweiterten Bildpunkte der zweiten Art aneinander grenzen oder sich sogar überschneiden, so werden die beiden Teilobjekte mittels der Bildpunkte der zweiten Art zu einem erweiterten Teilobjekt verbunden. Auf dieses erweiterte Teilobjekt kann nun der Dehnungsprozess weiter angewendet werden, falls beispielsweise eine Iterationsschrittweite noch nicht erreicht ist.

Das erweiterte Teilobjekt kann dabei alle Bildpunkte der zweiten Art mit einbeziehen, die in dem Dehnungsprozess genutzt wurden oder sich auf einen Teil dieser Bildpunkte der zweiten Art beschränken, beispielsweise nur die Bildpunkte der zweiten Art mit einbeziehen, die einen zusammenhängenden Pfad zwischen den ursprünglichen Teilobjekten herstellen. Je größer der Mindestabstand bzw. die Iterationsschrittweite gewählt werden, desto höher der Verbindungsgrad, das heißt die Anzahl an Verbindungen zwischen Teilobjekten aus Bildpunkten der ersten Art. Allerdings kann ein zu hoch gewählter Mindestabstand auch dazu führen, dass Teilobjekte aus Bildpunkte der ersten Art, die weit auseinander liegen, verbunden werden und so zu unerwünschten Artefakten führen.

Das zu erkennende Objekt beschreibt sich durch die Summe von erhaltenen erweiterten Teilobjekten und/oder Teilobjekten aus Bildpunkten der ersten Art. Die Summe ist im Sinne einer Zusammenfassung der Teilobjekte bzw. der erweiterten Teilobjekte zu verstehen. Die Summe der Teilobjekte aus Bildpunkten der ersten Art und/oder der erhaltenen, erweiterten Teilobjekte kann zusammengefasst werden, um eine Darstellung des zu erkennenden Objekts zu erhalten.

Es kann hierbei vorkommen, dass gleich beim zweiten Schritt 14 des Verfahrens 10 diejenigen Teilobjekte aus Bildpunkten der ersten Art ermittelt werden, die das zu erkennende Objekt beschreiben ohne dass es notwendig wäre, diese Teilobjekte mit Bildpunkten der zweiten Art zu verbinden. Dieser Fall kann beispielsweise bei einer sehr guten Beleuchtung des Objekts auftreten. Alternativ kann der Fall auftreten, dass das zu erkennende Objekt sich aus Teilobjekten aus Bildpunkten der ersten Art und aus erweiterten Teilobjekten, die erst durch ein Verbinden von Teilobjekten entstanden sind, zusammensetzt. Beispielsweise kann das Bild Bereiche aufweisen, die gut beleuchtet sind, und andere Bereiche, die schlechter beleuchtet sind. In den ersteren Bereichen brauchen beispielsweise keine Teilobjekte zusammengefügt werden, während in den schlechter beleuchteten Bereichen erst ein erkennbares Objekt entsteht, wenn Teilobjekte zu erweiterten Teilobjekten zusammengefügt werden.

Dabei können alle erhaltenen erweiterten Teilobjekte und/oder Teilobjekte in die Summe eingehen oder nur die erhaltenen erweiterten Teilobjekte und/oder Teilobjekte, die einer bestimmten Beziehung genügen. Beispielsweise kann dies eine spezielle geometrische Form sein. Hat das Objekt eine längliche oder linienartige Form, so können beispielsweise nur erweiterte Teilobjekte und/oder Teilobjekte für die Summenbildung berücksichtigt werden, die ebenfalls eine längliche oder linienartige Form aufweisen, um somit bereits im vorhinein Artefakte auszuschließen.

Beispielsweise kann eine vorgegebene geometrische Form eine Hauptlängsachse aufweisen, so dass die erweiterten Teilobjekte und/oder die Teilobjekte daraufhin geprüft werden, ob sie ebenfalls die Hauptlängsachse aufweisen, die beispielsweise unter einem bestimmten Winkel oder innerhalb eines bestimmten Winkelbereiches verlaufen kann. Ist beispielsweise bekannt, dass das zu erkennende Objekt ein Kratzer ist, der eine bestimmte Richtung aufweist, beispielsweise horizontal zur Bildachse, so können beispielsweise nur derartige erweiterte Teilobjekte und/oder Teilobjekte in die Summenbildung aufgenommen werden, die eine geometrische Form aufweisen, deren Hauptlängsachse ebenfalls in etwa horizontal zur Bildachse verläuft.

Auch kann eine relative Abstandsbeziehung zwischen den erweiterten Teilobjekten und/oder den Teilobjekten ausgenutzt werden, beispielsweise, dass nur derartige erweiterte Teilobjekte und/oder Teilobjekte in die Summenbildung mit aufgenommen werden, bei denen ein gegenseitiger Abstand zwischen einzelnen der erweiterten Teilobjekte und/oder der Teilobjekte innerhalb eines vorgegeben Abstandsbereichs liegt. Somit kann ausgeschlossen werden, dass ein längliches Objekt aus erweiterten Teilobjekten und/oder Teilobjekten gebildet wird, die so weit von einer Mehrzahl der erweiterten Teilobjekte und/oder der Teilobjekte entfernt liegen, dass ein logischer Zusammenhang ausgeschlossen werden kann.

Somit kann die Zusammenfassung der Teilobjekte aus Bildpunkten der ersten Art und/oder der erhaltenen, erweiterten Teilobjekte bzgl. einer Ausrichtung, einer Geometrie (d.h. beispielsweise längliche Objekte), einem gegenseitigen Abstand und/oder einer Größe (d.h. einer Anzahl an Bildpunkten) der Teilobjekte und/oder der erweiterten Teilobjekte erfolgen.

Das zu erkennende Objekt kann beispielsweise ein längliches oder linienartiges Objekt sein, z. B. ein Kratzer, ein Riss, eine Spalte bei der industriellen Bildverarbeitung, beispielsweise von Metallteilen. Es ist aber auch möglich, Blutgefäße, beispielsweise auf der Netzhaut oder in der Herzgegend, oder auch Chromosomen im medizinischen Anwendungsbereich zu erkennen. Das Verfahren 10 beschränkt sich jedoch nicht nur auf die Erkennung von länglichen Objekten, es kann auch zur Erkennung anders geformter Objekte angewendet werden, beispielsweise zur Erkennung von Beulen oder auch zur Mustererkennung, beispielsweise Gesichtsfelderkennung oder Erkennung von Fingerabdrücken oder anders geformter Objekte.

Das Bild kann einen komplexen Hintergrund aufweisen, beispielsweise verursacht durch starke Störungen, Reflexionen oder schwache Beleuchtung. Beispielanwendungen sind Auffinden von Rissen und Kratzern auf Werkstücken unter Echtzeitbedingungen in der industriellen Bildverarbeitung und Auffinden von länglichen Strukturen, zum Beispiel Blutgefäße, Knochenbrüche etc. in der medizinischen Bildverarbeitung.

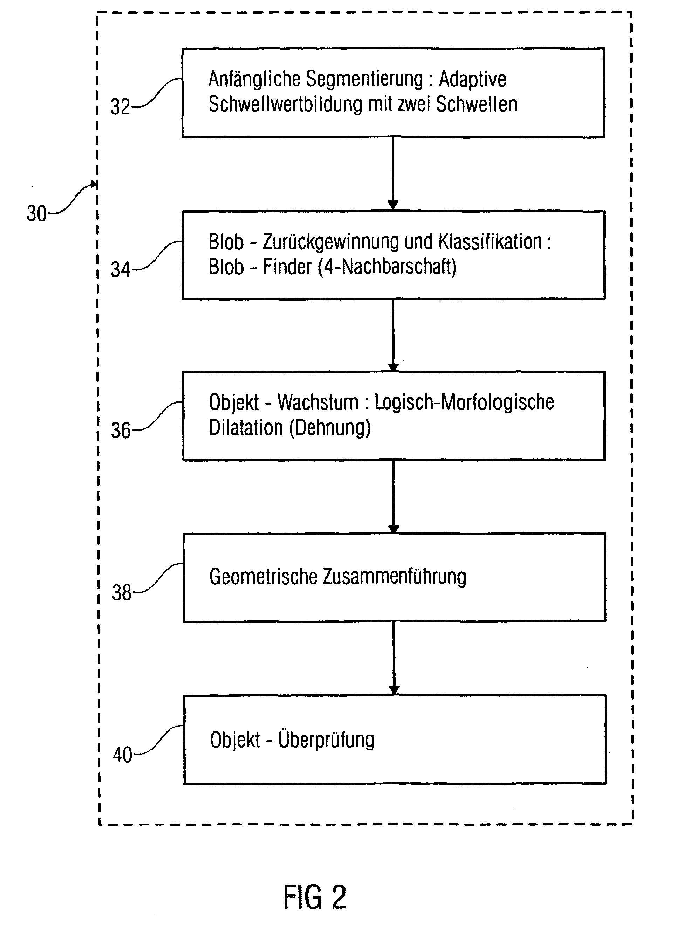

Fig. 2 zeigt ein Blockschaltbild eines Verfahrens zum Erkennen von Objekten gemäß einem weiteren Ausführungsbeispiel der Erfindung. Das Verfahren 30 umfasst einen ersten Schritt 32 "anfängliche Segmentierung: adaptive Schwellwertbildung mit zwei Schwellen", einen zweiten Schritt 34 "Blob-Zurückgewinnung und Klassifikation: Blobfinder (Vierer-Nachbarschaft)", einen dritten Schritt 36 "Objektwachstum: logisch-morphologische Dilation (Dehnung), einen vierten Schritt 38 "geometrische Zusammenführung" und einen fünften Schritt 40 "Objekt-Überprüfung".

Der erste Schritt 32, die anfängliche Segmentierung entspricht der Binarisierung des Bildes mit einer adaptiven Schwelle, welche für jeden Bildpunkt bzw. Pixel des Bildes wie folgt berechnet werden kann:

$$T(x, y) = C\, \bar{I}(x, y),$$

wobei T(x,y) die adaptive Schwelle bezeichnet, C einen vorgegebenen Kontrastfaktor und $\bar{I}$(x,y) die gemittelte Bildhelligkeit in der Umgebung bzw. in einer Region um den jeweiligen Bildpunkt (x,y). Die gemittelte Bildhelligkeit in der Umgebung bestimmt sich zu:

$$\bar{I}(x, y) = \frac{1}{N_{MN}} \sum_{m=-M}^{m=M} \sum_{n=-N}^{n=N} I(x-m, y-m),$$

wobei $N_{MN}$ die Fläche der Region um den jeweiligen Bildpunkt bezeichnet bzw. die Fläche des Mittelungsfilters.

Im zweiten Schritt 34 des Verfahrens 30 erfolgt die Blob-Zurückgewinnung und Klassifikation von verbundenen markierten Bildpunkten bzw. Pixeln mittels einer speziellen Funktion mit der Bezeichnung Blobfinder, welche die Umrandung jedes Blobs und seine Parameter bestimmt.

Der dritte Schritt 36 des Verfahrens 30 führt ein logischmorphologisches Dilations- bzw. Dehnungsverfahren aus, um ein Objektwachstum zu erzielen. Bei der logisch-morphologischen Dilation ("LMD") werden Fragmente eines Objekts zusammengeführt, die für einen Menschen als zusammengehörig erscheinen. Falls das Objekt in einzelne Fragmente mittels eines bestimmten (starken) Schwellwerts untergliedert ist, so kann es als ein verbundenes bzw. zusammenhängendes Objekt mittels eines anderen (schwachen) Schwellwerts segmentiert werden. Wenn aber dieser schwache Schwellwert auf die gesamte Fläche des Bildes angewendet wird, so erhält man sehr viele andere Objekte, das heißt Artefakte oder Fehler. Deshalb werden in dem dritten Schritt 36 des Verfahrens 30 Fragmente von Objekten gefunden und klassifiziert, ob länglich oder nicht, mittels Verwendung eines starken Schwellwerts, wobei längliche Objekte nur mittels der Information, die über den schwachen Schwellwert gegeben ist, gedehnt werden. Das heißt, in dem dritten Schritt 36 wird eine temporäre Dehnung der anfänglich länglichen Objekte mit Pixeln oder Bildpunkten des schwachen Schwellwerts nach einer Achter-Nachbarschaftsregel durchgeführt.

Falls der Umfang dieses gedehnten Objekts ein anderes "stark" markiertes Objekt erreicht, wird dieses Objekt zu dem anfänglichen Objekt hinzugefügt. In dem erhaltenen Bild des Objekts wird die schwache Markierung selbst nicht gezeigt. Auf diese Weise ist es möglich, Fragmente zu verbinden, die durch eine große Entfernung getrennt sind und die nicht durch gewöhnliche morphologische Schließungsverfahren verbunden werden können. Auf der anderen Seite werden keine Nachbarfragmente verbunden, falls zwischen Ihnen keine "natürliche" Verbindung existiert.

In einem vierten Schritt 38 des Verfahrens 30 wird eine zusätzliche geometrische Zusammenführung von detektierten Fragmenten vor der Größenüberprüfung ausgeführt. Mittels der geometrischen Zusammenführung werden einzelne Fragmente, die als gegenseitige Verlängerungen lokalisiert sind, gesammelt und zusammengeführt. Beispielsweise kann die geometrische Zusammenführung Informationen auswerten, die sich auf die Richtung von Sprüngen oder Rissen oder auf eine Größe des Spalts zwischen markierten Pixel beider Fragmente beziehen. Dies entspricht der menschlichen Wahrnehmung eines Sprunges oder eines Risses als ein ganzes Objekt.

Die geometrische Zusammenführung von detektierten Fragmenten kann somit bzgl. einer Ausrichtung, einer Geometrie (d.h. beispielsweise längliche Fragmente), einem gegenseitigen Abstand und/oder einer Größe (d.h. einer Anzahl an Bildpunkten) der Fragmente erfolgen.

In dem fünften Schritt 40 des Verfahrens 30 wird eine Objektüberprüfung durchgeführt. Die Objektüberprüfung ist ein einfaches Verfahren, das verifiziert, ob die Größe des Objekts eine vorgegebene Schranke überschreitet. Beispielsweise kann eine solche Schranke einer Größe von 140 Pixel entsprechen, um signifikante Sprünge oder Risse zu definieren. In der Objektüberprüfung 40 werden kleine Objekte bis zu einer Größe von N Pixel ignoriert, wobei N von dem Bild und der Aufgabe abhängen kann. Die Größe des zu erkennenden Objekts kann mittels Vergleichen einer Anzahl an Bildpunkten, die das zu erkennende Objekt umfasst, mit einer vorgegebenen Anzahl überprüft werden.

Dies führt neben einer Verarbeitung nur der gedehnten Objekte in dem dritten Schritt 36 des Verfahrens 30 zu einer weiteren Beschleunigung des gesamten Verfahrens 30. In der logisch-morphologischen Dilation gemäß dem dritten Schritt 36 werden nämlich die Blobs vor der Dehnung erst analysiert, so dass die Objekte sortiert werden können und ihre Anzahl beträchtlich reduziert werden kann, bevor sie weiterverarbeitet werden.

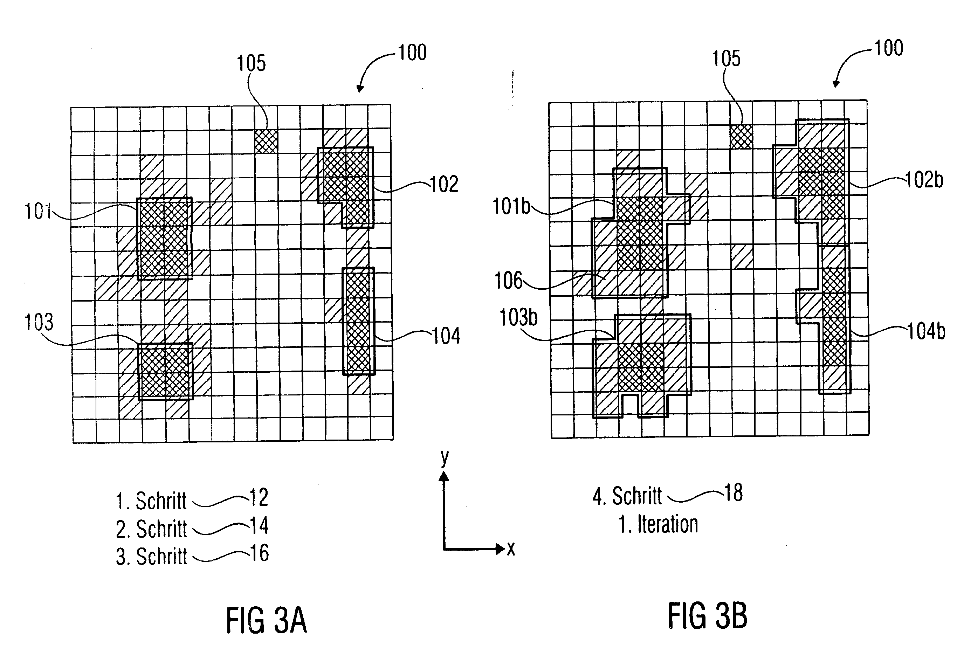

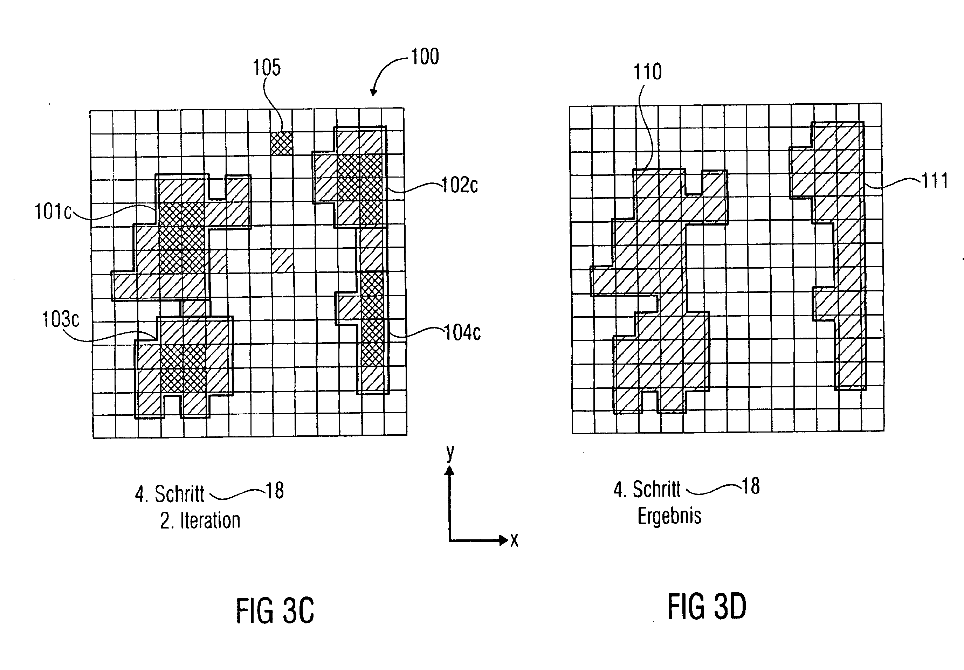

Fig. 3a-3d zeigen Pixeldiagramme eines Verfahrens zum Erkennen eines Objekts gemäß einem Ausführungsbeispiel der Erfindung. In Fig. 3a sind die ersten drei Schritte 12, 14, 16 des Verfahrens 10 dargestellt. In Fig. 3b ist eine erste Iteration und in Fig. 3c eine zweite Iteration innerhalb des vierten Schrittes 18 des Verfahrens 10 dargestellt. In Fig. 3d ist das Ergebnis des Verfahrens 10 dargestellt.

In Fig. 3a ist ein Bild 100 als ein Raster aus 14 x 14 Pixel dargestellt, das Bildpunkte unterschiedlicher Intensität aufweist. In einem ersten Schritt 12 des Verfahrens 10 werden ein erster und ein zweiter adaptiver Schwellwert für Bildpunkte des Bildes bestimmt, die von einer mittleren Intensität in einer Region um den jeweiligen Bildpunkt abhängen. In dem Bild 100 sind Bildpunkte hoher Intensität mit einer doppelten Schraffur dargestellt und Bildpunkte mittlerer Intensität mit einer einfachen Schraffur, während Bildpunkte geringer Intensität ohne Schraffur dargestellt sind.

Basierend auf einem Vergleich mit dem ersten adaptiven Schwellwert werden die Bildpunkte der ersten Art in dem zweiten Schritt 14 des Verfahrens 10 bestimmt. Diese Bildpunkte der ersten Art sind weiterhin mit der doppelten Schraffur dargestellt.

In einem Vergleich mit dem zweiten adaptiven Schwellwert werden die Bildpunkte der zweiten Art in dem dritten Schritt 16 des Verfahrens 10 ermittelt, die in dem Bild 100 weiterhin mit der einfachen Schraffur dargestellt sind.

In dem zweiten Schritt 14 des Verfahrens 10 werden weiterhin Teilobjekte aus den Bildpunkten der ersten Art ermittelt, wobei in dem Bild 100 die vier Teilobjekte 101, 102, 103 und 104 ermittelt wurden. Dies kann beispielsweise mittels Auswertung der Vierer-Nachbarschaftsbeziehung auf die Bildpunkte der ersten Art ermittelt werden. Mit Hilfe dieser Beziehung lassen sich sechs Bildpunkte der ersten Art (doppelt schraffiert dargestellt) auffinden, die ein erstes Teilobjekt 101 formen, weitere fünf Bildpunkte der ersten Art, die ein zweites Teilobjekt 102 formen, weitere vier Bildpunkte der ersten Art, die ein weiteres Teilobjekt 103 formen und weitere vier Bildpunkte der ersten Art, die ein weiteres Teilobjekt 104 formen.

Ein einzelner Bildpunkt der ersten Art 105 weist keine Nachbarschaftsbeziehung zu weiteren Bildpunkten der ersten Art auf, so dass er für die weitere Verarbeitung unberücksichtigt gelassen wird. Die einzelnen Teilobjekte 101, 102, 103, 104 werden auf eine gewisse Mindestgröße hin überprüft. Dies ist beispielsweise eine Anzahl von vier Bildpunkten der ersten Art, die alle vier Teilobjekte aufweisen, so dass alle vier Teilobjekte für die weitere Verarbeitung mit berücksichtigt werden.

In einem vierten Schritt 18 werden die ersten und die zweiten Teilobjekte mittels Bildpunkten der zweiten Art zu einem erweiterten Teilobjekt verbunden, wenn ein Mindestabstand zwischen dem ersten und dem zweiten der Teilobjekte vorhanden ist. Dies kann durch einen Wachstumsprozess verdeutlicht werden, der in diesem Ausführungsbeispiel iterationsweise stattfindet.

Eine erste Iteration des Wachstumsprozesses ist in Fig. 3b dargestellt. Dabei werden die ermittelten Teilobjekte 101, 102, 103, 104 um benachbarte Bildpunkte der zweiten Art erweitert, so dass die Teilobjekte 101, 102, 103, 104 sich vergrößern, und dass vergrößerte Teilobjekte 101b, 102b, 103b und 104b entstehen. Die Vergrößerung der Teilobjekte erfolgt mittels Auswertung einer Achter-Nachbarschaftsregel, wobei Randbildpunkte der Teilobjekte 101, 102, 103, 104 auf ihre Nachbarschaft zu Bildpunkten der zweiten Art hin überprüft werden und gefundene benachbarte Bildpunkte der zweiten Art mit in die Teilobjekte aufgenommen werden, um so die vergrößerten Teilobjekte 101b, 102b, 103b, 104b zu formen.

Beispielsweise wird der Bildpunkt 106 aufgrund der Achter-Nachbarschaftsregel zu dem ersten Teilobjekt 101 hinzugefügt, während er bei Anwendung einer Vierer-Nachbarschaftsregel nicht hinzugefügt werden würde, da er eine diagonale Nachbarschaft zu einem der Bildpunkte des ersten Teilobjekts 101 aufweist. Natürlich ist es auch möglich, eine Vierer-Nachbarschaftsregel für den Wachstumsprozess zu nutzen.

In Fig. 3c ist ein zweiter Iterationsschritt für den vierten Schritt 18 des Verfahrens 10 zum Erkennen eines Objekts dargestellt. Die vergrößerten Teilobjekte 101b, 102b, 103b und 104b wachsen nochmals um benachbarte Bildpunkte der zweiten Art, so dass nochmals vergrößerte Teilobjekte 101c, 102c, 103c und 104c entstehen. Auch bei diesem zweiten Wachstumsprozess werden nur solche benachbarten Bildpunkte in die Nachbarschaftsregel mit einbezogen, die aus Bildpunkten der zweiten Art bestehen. Nicht zum Wachstum einbezogen werden Bildpunkte, die weder der ersten Art noch der zweiten Art zugeordnet sind, das heißt Bildpunkte, die eine geringe Intensität aufweisen und durch eine fehlende Schraffur dargestellt sind.

In dem hier dargestellten Bild 100 würde der Wachstumsprozess von selbst stoppen, da keine weiteren benachbarten Bildpunkte der zweiten Art mehr bei einem weiteren Wachstumsprozess in die Teilobjekte mit einbezogen werden können.

In Fig. 3d ist das Ergebnis des vierten Schritts 18 des Verfahrens 10 dargestellt. Die ursprünglichen Teilobjekte 101 und 103 sind zu einem erweiterten Teilobjekt 110 verbunden worden und die ursprünglichen Teilobjekte 102 und 104 zu einem erweiterten Teilobjekt 111. Das zu erkennende Objekt wird durch die Summe der beiden erweiterten Teilobjekte 110 und 111 beschrieben. Beispielsweise ist es hier noch möglich, die geometrische Form der erweiterten Teilobjekte 110, 111 zu berücksichtigen und beispielsweise derartige erweiterte Teilobjekte unberücksichtigt zu lassen, deren geometrische Form von einer vorgegebenen Form zu stark abweicht. Da beide der erweiterten Teilobjekte 110, 111 eine Längsachse aufweisen, die in die gleiche Richtung zeigt, können beispielsweise beide erweiterten Teilobjekte als zwei längliche Objekte, beispielsweise Kratzer, identifiziert werden.

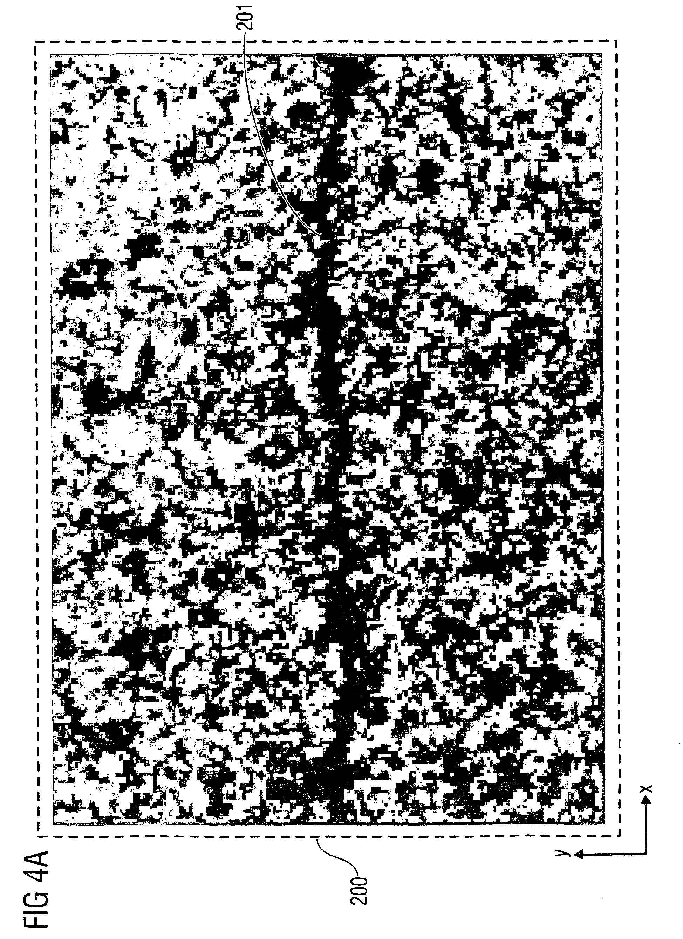

Fig. 4a zeigt ein Bild eines kratzerartigen Objektes im Original, beispielsweise nach Aufnahme mit einer Kamera. Das Bild 200 weist eine Vielzahl von Bildpunkten auf, die in einem rechteckigen Raster angeordnet sind, und verschiedene Graustufenintensitäten aufweisen. Man erkennt auf dem Originalbild 200 einen Kratzer 201, der in etwa in der Bildmitte etwa horizontal durch das Bild verläuft. Unter "horizontal" oder einer horizontalen Ausrichtung sind dabei Ausrichtungen zu verstehen, die parallel zur x-Achse (in den Figuren angegeben) verlaufen. Unter "vertikal" oder einer vertikalen Ausrichtung dagegen sind Ausrichtungen zu verstehen, die parallel zur y-Achse (in den Figuren angegeben) verlaufen. Eine Detektion dieses Kratzers 201 ist Aufgabe des Verfahrens 10.

In dem ersten Schritt 12 des Verfahrens 10 werden den Bildpunkten des Bildes 200, abhängig von einer mittleren Intensität in einer Region um den jeweiligen Bildpunkt ein erster und ein zweiter adaptiver Schwellwert zugeordnet.

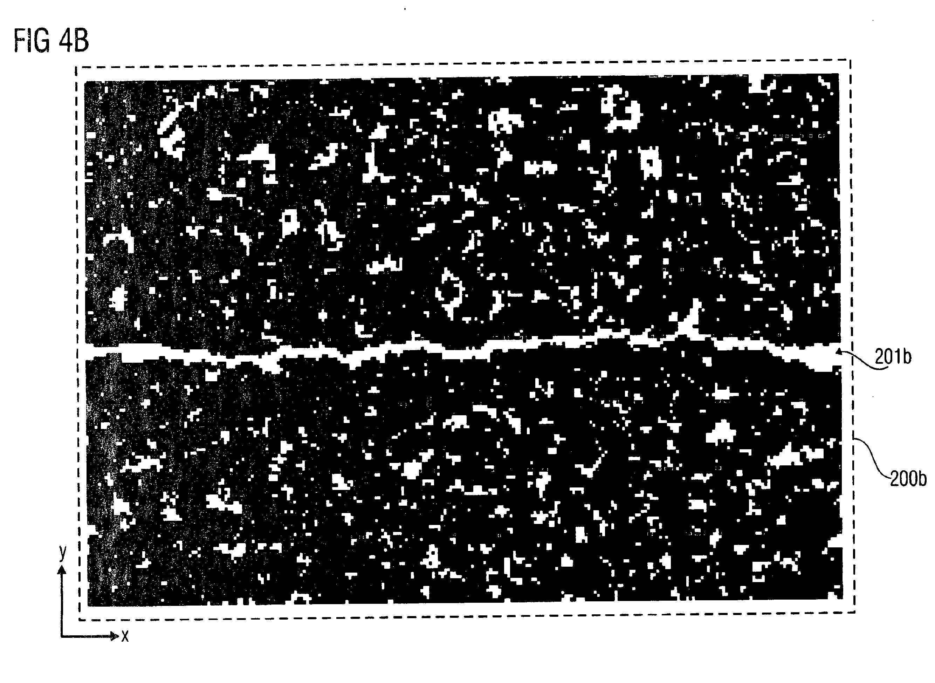

Fig. 4b zeigt das Bild 200 aus Fig. 4a nach einem zweiten Schritt 14 des Verfahrens 10. Es werden die Bildpunkte dargestellt (hier in weiß), deren Intensität den ersten adaptiven Schwellwert überschreitet. Es entsteht ein Bild 200b, das stark kontrastreiche Bildpunkte mit der Farbe weiß darstellt und kontrastarme Bildpunkte mit der Farbe schwarz.

Der ursprüngliche Riss 200 ist hier in der Farbe weiß gekennzeichnet und als ein Riss 201b noch erkennbar. Ein Vergleich der Bildpunkte mit dem zweiten adaptiven Schwellwert entsprechend einem dritten Schritt 16 des Verfahrens 10 führt zu einem ähnlichen Bild wie dem in Fig. 4b dargestellten, das hier jedoch nicht dargestellt ist.

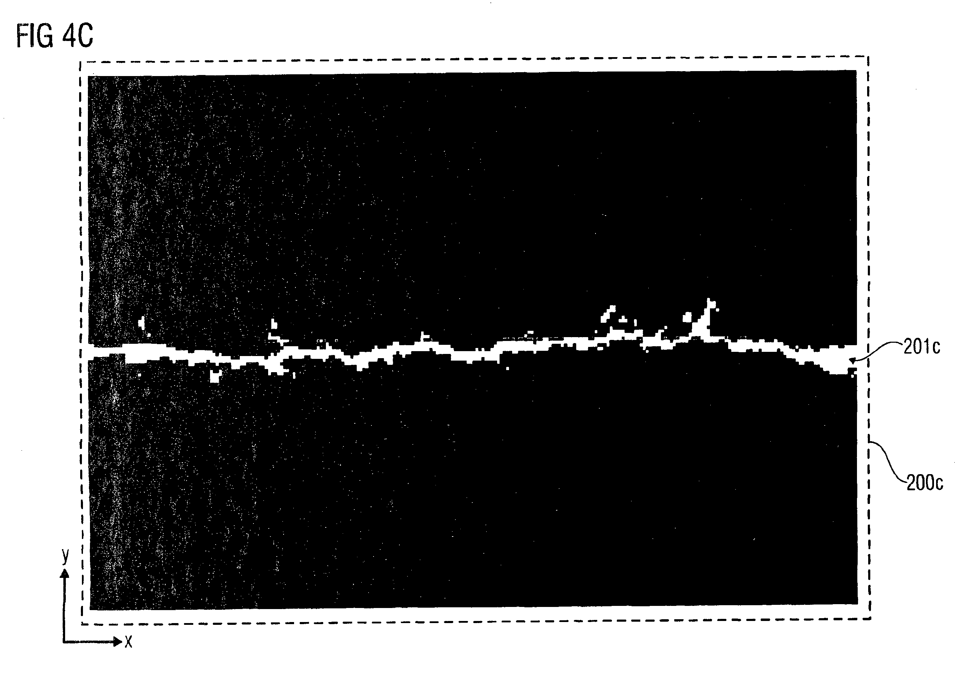

Fig. 4c zeigt das Bild 200 aus Fig. 4a nach einem vollständigen Durchlauf des Verfahrens 10. Alle gefundenen Objekte unterhalb einer Größe von 40 Pixel sind hier gelöscht. Kleine Objekte des Hintergrundes sind deswegen nicht mehr sichtbar, da alle kleinen Objekte beim "Object Checking" (Objektüberprüfung) samt deren Markierungen gelöscht werden. Daher bleiben nur Fragmente, die zum Riss gehören und die vom Verfahren 10 über die kontrastarme Markierung (Bildpunkte zweiter Art) zusammengefasst werden. Die kontrastarme Markierung ist im Bild nicht enthalten. Das entstandene Bild 200c stellt den Riss 201 gemäß Fig. 4a als ein weißes linienförmiges Objekt 201c dar. Der ursprüngliche Riss 201 ist dadurch sehr gut erkennbar, da nur Bildpunkte 201c, die zu dem Riss 201 zugehörig sind, auf einem schwarzen Hintergrund dargestellt werden. Nur Fragmente, die über die kontrastarme Markierung an den Riss angeschlossen sind, werden ebenfalls weiß dargestellt. Sämtliche Fragmente, die nicht zur geometrischen Gestalt des rissartigen Objekts 201 gehören, werden in dem Bild 200c nicht dargestellt. Insbesondere, bei einem Hintergrund, der stark unterschiedliche Intensitäten aufweist, und bei dem es selbst für das menschliche Auge schwer ist, das rissartige Objekt 201 von dem Hintergrund zu unterscheiden, liefert das Verfahren 10 zum Erkennen eines Objekts eine sehr gute Erkennungsrate, die es ermöglicht, den Riss 201 von seinem Hintergrund zu unterscheiden.

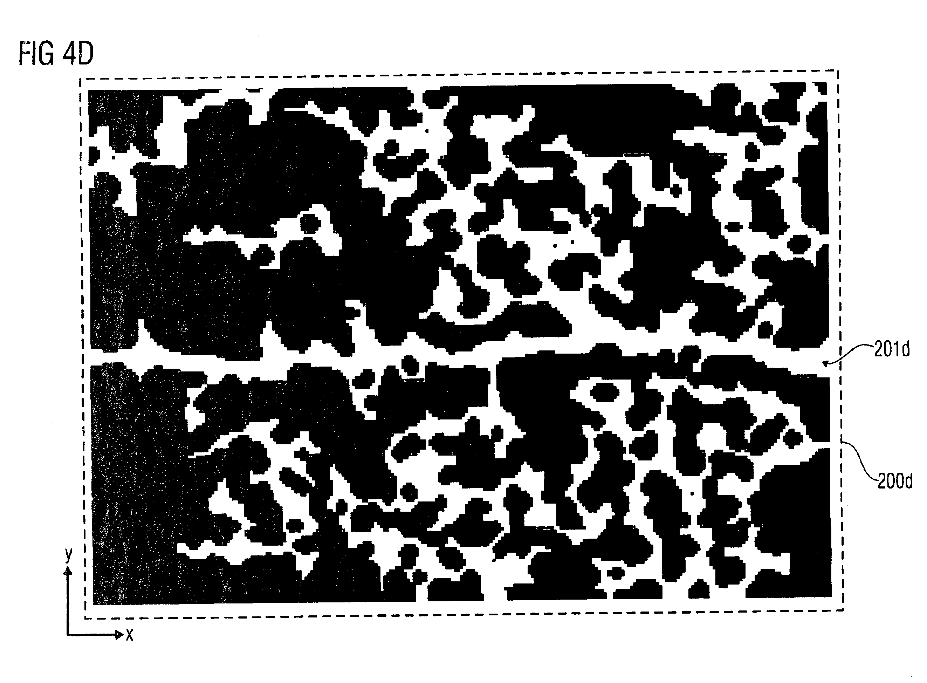

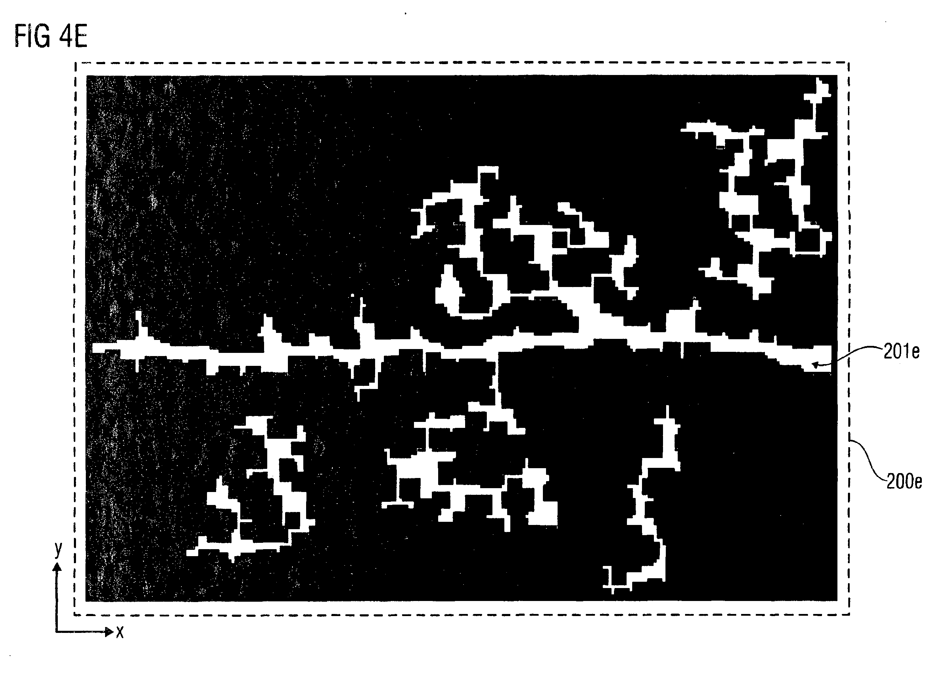

Um die Erkennungsgüte des Verfahrens 10 gegenüber herkömmlichen Verfahren zum Erkennen von Objekten aufzuzeigen, sind in den Fig. 4d und 4e Bilder des rissförmigen Objekts 200d, 200e dargestellt, die aus dem gleichen Bild 200 gemäß Fig. 4a und Fig. 4b gewonnen wurden, wobei jedoch zwei unterschiedliche herkömmliche Verfahren zum Erkennen von Objekten eingesetzt wurden. Alle gefundenen Objekte unterhalb einer Größe von 40 Pixel sind hier ebenfalls gelöscht. Das heißt, alle kleinen Objekte sind hier gelöscht. Es bleiben nur an den Riss angeschlossene Fragmente oder Objekte, die groß genug sind, um als Fragmente erkannt zu werden. Das Bild 200d stellt das Ausgangsbild dar, das aus einem letzten Segmentierungsschritt eines herkömmlichen Verfahrens zum morphologischen Schließens mittels modifizierter Erosion gewonnen wurde. Bei der modifizierten Erosion werden nicht alle Nachbarpixel in einem Erosionsschritt abgetragen, sondern nur diejenigen Nachbarpixel, die mehr als einen Kontakt mit nicht erweiterten Pixel aufweisen.

Das Ausgangsbild 200e wurde mit einem herkömmlichen Verfahren zum morphologischen Schließen durchgeführt, wobei die morphologischen Operationen einer Standardprogrammbibliothek entnommen wurden. Für beide Ausgangsbilder 200d, 200e, sind zahlreiche Fragmente neben dem erkannten rissförmigen Objekt 201d bzw. 201e zu erkennen. Diese verteilen sich über das gesamte Bild und ermöglichen es dem Betrachter nicht mehr, ein rissförmiges Objekt 201 gemäß dem Ursprungsbild 200 aus Fig. 4a wahrzunehmen, sondern die Fragmente führen dazu, dass der Betrachter eine Art Blattstruktur oder eine Baumstruktur mit zahlreichen Verästelungen wahrnimmt. Es sieht so aus, als ob das gesamte Ausgangsbild 200d bzw. 200e mit Rissen überzogen wäre. Bei dem Verfahren mit modifizierter Erosion, dessen Ausgangsbild in Fig. 4d dargestellt ist, werden noch viel mehr Fragmente deutlich als bei dem herkömmlichen Verfahren, dessen Ausgangsbild 200e in Fig. 4e dargestellt ist. Beide Bilder 200d, 200e verdeutlichen die Überlegenheit des erfindungsgemäßen Verfahrens zum Erkennen eines Objekts gegenüber den herkömmlichen Verfahren.

Die herkömmlichen Verfahren zum morphologischen Dehnen betrachten keine Merkmale der umgebenden Pixel. Das einzige Merkmal, das betrachtet wird, ist der geometrische Kontakt zu dem markierten Pixel. Auf gestörten Oberflächen mit einer Menge von Objekten und kurzen Entfernungen zwischen ihnen kann dies zu Fehlern führen. Physikalisch unterschiedliche Objekte können verbunden werden. Durch eine große Anzahl von Schritten zum morphologischen Schließen kann es sogar auftreten, dass die gesamte Oberfläche verbunden wird. Dieser Effekt ist in den Fig. 4d und 4e dargestellt.

Zur anfänglichen Segmentierung wurde ein Kontrastfaktor von $C_1 = 0,8$ verwendet, wobei eine Größe des Mittelungsfilters 11 x 11 Pixel betrug. Das bedeutet, zur Mittelung der Intensität wurde eine Region der Größe 11 x 11 Pixel bzw. M = N = 5 gewählt. Der erste adaptive Schwellwert $T_1(x,y)$ wurde in Abhängigkeit von der mittleren Intensität über diesen Bereich von 11 x 11 Pixel und einem Kontrastfaktor von $C_1 = 0,8$ bestimmt.

Zur Ermittlung der beiden Bilder 200d, 200e, wurde kein weiterer adaptiver Schwellwert verwendet. Zur Ermittlung des Bildes 200c mit dem erfindungsgemäßen Verfahren 10 hingegen wurde ein weiterer adaptiver Schwellwert $T_2(x,y)$ mittels Multiplikation der mittleren Intensität, gemittelt über den Bereich der Größe 11 x 11 Pixel, mit einem zweiten Kontrastfaktor $C_2 = 0,9$ bestimmt. Dabei spezifiziert der erste Kontrastfaktor $C_1 = 0,8$ einen starken Kontrast, während der zweite Kontrastfaktor $C_2 = 0,9$ einen schwachen Kontrast spezifiziert. Da das zu erkennende Objekt mittels weißer Pixel dargestellt ist, ist in diesem Fall der starke Kontrastfaktor $C_1$ kleiner als der schwache Kontrastfaktor $C_2$. Bei einer Darstellung mittels schwarzer Pixel würde sich das Verhältnis umkehren.

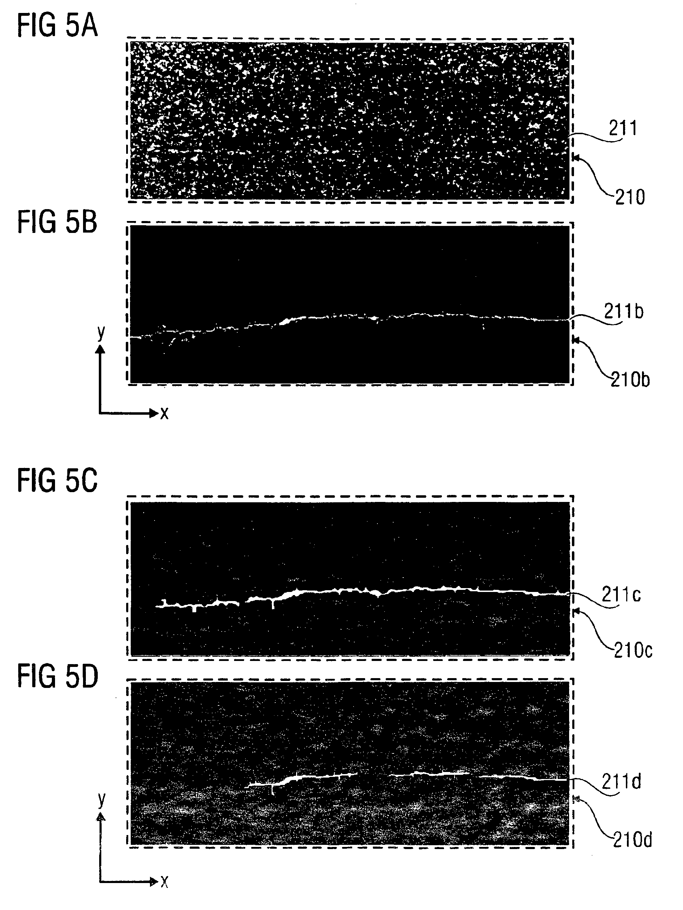

Nicht alle Risse und Sprünge sind so breit und evident wie in Fig. 4a dargestellt. In vielen Fällen ist das Objekt in vielfältige separate Segmente unterteilt, wie beispielsweise in Fig. 5a dargestellt.

Fig. 5a zeigt die Darstellung eines feinen Haarrisses 211, der in etwa horizontal durch das Bild 210 verläuft und sich nur schwer von dem Hintergrund unterscheiden lässt. Bei dem Haarriss 211 erhält man unabhängig von der Methode der Bildverarbeitung Fragmente.

Fig. 5b stellt das Ausgangsbild 210b nach Durchlauf eines erfindungsgemäßen Verfahrens 10 dar, in dem eine Darstellung des Haarrisses 211b sehr stark der ursprünglichen Form des Haarrisses 211 ähnelt. Dieser lässt sich als eine weiße Linie 211b auf schwarzem Hintergrund in etwa horizontal über das Bild 210b verlaufend wahrnehmen.

Fig. 5c stellt ein Ausgangsbild 210c dar, wie es nach einem herkömmlichen Verfahren zum morphologischen Schließen mit modifizierter Erosion erzeugt wird. Die Darstellung des Haarrisses 211c ist wesentlich breiter als der ursprüngliche Haarriss 211, auch werden nicht alle feinen Ausläufer erfasst.

Fig. 5d stellt ein Ausgangsbild 210d eines Verfahrens zum morphologischen Schließen mittels Morphologiefunktionen aus einer Standardbibliothek dar. Die Darstellung des Haarrisses 211d wird nicht vollständig erfasst. Es sind drei kleinere haarrissartige Fragmente zu erkennen, jedoch nicht der gesamte Haarriss 211 entsprechend der Darstellung in Fig. 5a. Sowohl in Fig. 5b als auch in Fig. 5c und Fig. 5d sind nur die großen Fragmente, das heißt, Fragmente mit mehr als 40 Pixel Größe dargestellt.

Mit dem Verfahren gemäß Ausführungsbeispielen der Erfindung werden die Blobs bzw. die Teilobjekte, umfassend die Bildpunkte der ersten Art, vor der Dehnung analysiert. Deshalb können die Blobs sortiert und ihre Zahl signifikant verkleinert werden. Ferner werden solche erweiterten Teilobjekte weiterverarbeitet, die eine spezielle geometrische Form, beispielsweise die eines länglichen Objekts, aufweisen.

Zusätzlich und ohne die Ergebnisse der Berechnung zu beeinflussen, können kleine Teilobjekte bis zu einer Größe von N Pixel ignoriert werden, wobei N von den Bildeigenschaften und der Aufgabe der Bildverarbeitung abhängen kann. In Fig. 5b ist N gleich 4, so dass nur Teilobjekte mit einer Größe größer als 4 Pixel weiterverarbeitet werden. Somit erhält man eine Anzahl von 125 erkannten erweiterten Teilobjekten bezogen auf das Originalbild 211. Von diesen werden nur 27 als linienartige oder längliche Objekte erkannt.

Wesentlich mehr Objekte werden bei dem herkömmlichen Verfahren mit modifizierter Erosion erkannt, nämlich eine Anzahl von 842 und eine noch größere Anzahl von 1230 werden bei dem herkömmlichen Verfahren zum morphologischen Schließen mittels morphologischen Programmbibliotheken erkannt. Bei beiden herkömmlichen Verfahren wurde auch eine sehr große Anzahl an Rissfragmenten erkannt, was in der folgenden Tabelle dargestellt ist:

| Verfahren | Anzahl erkannter Objekte | Anzahl von Rissfragmenten |
| --- | --- | --- |
| gemäß Ausführungsbeispiel der Erfindung (LMD), Fig. 5b | 125 (27) | 4 |
| mit modifiziertem Schließen, Fig. 5c | 842 | 4 |
| mit Standard-Schließen, Fig. 5d | 1230 | 17 |

Es ist anzumerken, dass die Fläche, die in Fig. 5a-5d dargestellt ist, nur etwa 20 % der gesamten Oberfläche des Arbeitsplatzes darstellt. Insofern wird ein bedeutsamer Teil der Verarbeitungszeit bei den herkömmlichen Verfahren für die Blobgewinnung und Sortierung verwendet.

Ein Mensch dagegen nimmt diesen Haarriss als ein gesamtes Objekt wahr. In diesem Fall kann ein Verfahren zur geometrischen Aggregation bzw. Zusammenführung angewendet werden. Das heißt, einzelne Fragmente, die so angeordnet sind, dass sie eine gegenseitige Verlängerung darstellen, können gesammelt werden und als zu erkennendes Objekt dargestellt werden. Für die geometrische Aggregation kann ein einfaches Verfahren angewendet werden, das die Richtung der Risse und die Kluft zwischen markierten Bildpunkten von beiden Fragmenten berücksichtigt. Je mehr kleine Fragmente detektiert werden, um so schwieriger wird die geometrische Aggregation, deshalb haben herkömmliche Verfahren zum morphologischen Schließen hier einen signifikanten Nachteil.

Bei den drei Verfahren zur Darstellung der Bilder 210b, 210c und 210d wurden jeweils kleine Teilobjekte unberücksichtigt gelassen, die eine Objektgröße unterhalb von Pixeldarstellbarkeit aufwiesen.

Für einen Vergleich der Verarbeitungsgeschwindigkeiten und der Effizienz von Ausführungsbeispielen der Erfindung gegenüber herkömmlichen Verfahren zum morphologischen Schließen wurden 20 Bilder von industriellen Fertigungsteilen mit komplexen störbehafteten Oberflächen untersucht. Zehn von diesen Bildern wiesen keine Defekte (Risse, Spalten) auf, während zehn andere Bilder Oberflächenfehler in Form von Rissen aufzeigten. Die gesamte zu inspizierende Oberfläche hatte eine Größe von 700 x 900 Pixel. Die anfängliche Segmentierung wurde mit einem Kontrastfaktor von 0,78 für die zwei herkömmlichen Verfahren ausgeführt und mit den zwei Kontrastfaktoren 0,78 und 0,89 für Ausführungsbeispiele der Erfindung (LMD). Die Mittelungsparameter waren die gleichen. Ein Vergleich der Ergebnisse ist in der folgenden Tabelle gezeigt:

| Verfahren | Durchschnittliche Ausführungszeit | Falsche positive Erkennung | Falsche negative Erkennung | Anzahl anderer Artefakte |
| --- | --- | --- | --- | --- |
| Gemäß Ausführungsbeispiel der Erfindung (LMD), Fig. 5b | 64,8 | 0 | 0 | 0 |
| mit modifiziertem Schließen, Fig. 5c | 276,9 | 6 | 0 | 3 |
| mit Standard Schließen, Fig. 5d | 215,1 | 6 | 1 | 0 |

Die mittlere Ausführungszeit ist beträchtlich kürzer bei Ausführungsbeispielen der Erfindung. Alle Risse wurden mittels des erfindungsgemäßen Verfahrens und des herkömmlichen Verfahrens mit modifizierter Erosion erkannt. Das herkömmliche Verfahren mit modifizierter Erosion, allerdings lieferte zu viele falsch erkannte Risse auf Bildern, die keine Risse aufwiesen. Auch wurden viele Artefakte auf den rissbehafteten Oberflächen erkannt. Auch bei einer Reduzierung des Kontrastfaktors auf 0,75 für die anfängliche Segmentierung wurden bei dem herkömmlichen Verfahren mit modifizierter Erosion einige falsche negative Resultate erreicht, während das erfindungsgemäße Verfahren weiterhin richtige Ergebnisse lieferte.

Bei dunklen Objekten auf einem helleren Hintergrund werden die Kontrastfaktoren meist kleiner oder gleich 1 gewählt. Der "stärkere" Kontrast bedeutet auch einen kleineren Kontrastfaktor in diesem Fall, und bei einem "schwächeren" Kontrast ist der Kontrastfaktor größer. Die angegebenen Werte von 0,8 für die "starke Kontrastschwelle" und 0,9 für die "schwache Kontrastschwelle" entsprechen einem solchen Bildertyp von dunklen Objekten auf hellem Hintergrund. Die beiden Kontrastfaktoren 0,8 und 0,9 sind für den Bildertyp sehr feine Risse auf einem kontrastreichen Hintergrund optimiert.

Falls der Hintergrund wesentlich ruhiger wäre, könnte man die "konstrastarme" Schwelle bzw. beide Schwellen wesentlich erhöhen. Falls die Risse breiter, d. h. deutlicher und entsprechend kontrastreicher wären, könnte man die erste Kontrastschwelle (den ersten Quotienten) verringern. Die erste Kontrastschwelle bzw. die "starke" Kontrastschwelle (kontrastreiche Markierung) kann abhängig vom Zustand des Hintergrunds, der Breite der Risse und dem Kontrastrad der anderen Objekte, die zu finden sind, ausgewählt werden. Vorzugsweise bietet sich ein Bereich von 0,6 bis 0,9 an. Der zweite Kontrastfaktor (Quotient für die kontrastarme Markierung) hängt meist vom Hintergrund ab und wird meist wenig kleiner als 1 gewählt. Mit der beschriebenen Stichprobe liefern zweite Kontrastfaktoren im Bereich von 0,93 gute Ergebnisse. Bei einem ruhigen Hintergrund kann man sogar einen zweiten Kontrastfaktor im Bereich von 0,99 bis 1,00 verwenden. Bevorzugt sind Paare von Kontrastfaktoren zu wählen, bei denen die Differenz des ersten Kontrastfaktors, der den starken Kontrast angibt, zu 1, um einen Faktor von etwa 2 bis 3 größer ist als die Differenz des zweiten Kontrastfaktors, der den schwachen Kontrast angibt, zu 1.

Die Rechenzeit der herkömmlichen Verfahrens zum morphologischen Schließen (mit modifizierter Erosion gemäß Fig. 5c oder mittels Programmbibliothek gemäß Fig. 5d) überschreitet deutlich die Rechenzeit von Ausführungsbeispielen der Erfindung gemäß Fig. 5b. Auch die Ergebnisse der Detektion von Rissen sind nicht so gut wie bei den Ausführungsbeispielen der Erfindung. Viele Risse wurden stark fragmentiert dargestellt, siehe insbesondere Fig. 5d.

Das Verfahren 10 lässt sich auch in anderen Worten mit den folgenden drei Schritten beschreiben: "Anfängliches adaptives Multithreshholding (das heißt, Mehrfachschwellwertbildung) des Originalbildes mit zumindest zwei unterschiedlichen, kontrastreichen und kontrastarmen, Schwellen", "Auffinden und Beschreiben aller Erscheinungen auf einem Binärbild mit einer kontrastreichen Schwelle. Erstellen einer Liste der Erscheinungen mit Merkmalen eines linienartigen Objekts anhand dieser Beschreibung" und "Erweiterung der linienartigen Objekte aus der Liste der Reihe nach, dabei werden die Objekte nicht auf alle Nachbarpixel erweitert, wie bei der herkömmlichen Dilation, sondern nur auf Nachbarpixel, die mit der kontrastarmen Markierung gekennzeichnet sind. Sobald die Erweiterung durch eine kontrastarme Markierung ein anderes kontrastreiches Objekt erreicht hat, wird dieses Objekt zum erweiterten Objekt hinzugefügt bzw. vereinigt". Bei dieser Beschreibung sind der zweite 14 und der dritte 16 Schritt zu einem einzigen Schritt zusammengefügt.

Bei einem weiteren Ausführungsbeispiel kann das Verfahren 10 auch folgendermaßen beschrieben werden: Erweitern der kontrastreichen Objekte der Reihe nach, und zwar sukzessive, bis keine neuen markierten Punkte mehr gefunden werden. Dabei wird nicht unterschieden, ob eine Markierung einer groben oder feinen Art vorliegt, d.h. ob erweiterte Teilobjekte um Bildpunkte der ersten Art (grob bzw. kontrastreich) oder der zweiten Art (fein bzw. kontrastarm) erweitert werden. Es wird nur geprüft, ob alle grob markierten Pixel demselben Objekt angehören. Falls eine Markierung von einem anderen kontrastreichen Objekt gefunden wird, kann ein Umgrenzungsrahmen ("bounding box") an dieses Objekt angeschlossen werden, und die Suche wird weitergeführt. Das gefundene Objekt wird dabei einfach aus der Liste gestrichen.

Die Vorteile des Verfahrens 10 sind eine erhöhte Geschwindigkeit der Objektauffindung, besonders im Vergleich zu einem herkömmlichen Mehrfachschwellenbildungsverfahren, wie es unter [2] beschrieben ist. Die Vorteile sind ferner eine wesentliche genauere Auffindung der Objekte, besonders im Vergleich mit einem herkömmlichen morphologischen Schließungsverfahren, wie es in [1] beschrieben ist.

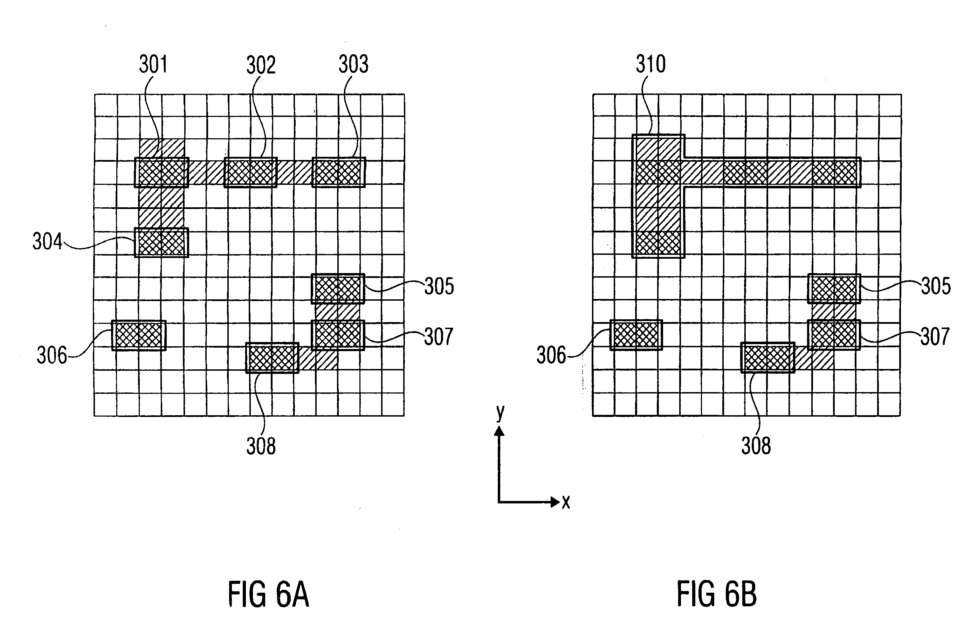

Fig. 6a-6c zeigen Pixeldiagramme eines Verfahrens zum Erkennen eines Objekts gemäß einem weiteren Ausführungsbeispiel der Erfindung. Dabei werden gemäß Schritt 12 des Verfahrens 10 ein erster und ein zweiter adaptiver Schwellwert für Bildpunkte des Bildes bestimmt, wobei der erste und der zweite adaptive Schwellwert von einer mittleren Intensität in einer Region um den jeweiligen Bildpunkt abhängen. Weiter werden gemäß Schritt 14 des Verfahrens 10 Teilobjekte aus Bildpunkten einer ersten Art ermittelt, wobei die Bildpunkte der ersten Art, basierend auf einem Vergleich mit dem ersten adaptiven Schwellwert erhalten werden. In Fig. 6a sind acht Teilobjekte 301 bis 308 ermittelt worden. Basierend auf diesen ermittelten Teilobjekten 301 bis 308 wird eine Abarbeitungsliste erzeugt, die Listenelemente enthält, die den ermittelten Teilobjekten 301 bis 308 zugewiesen sind. Beispielsweise erhält die Abarbeitungsliste in einem ersten Schritt die Elemente {1,2,3,4,5,6,7,8}, die den ermittelten Teilobjekten 301 bis 308 zugewiesen sind. In die Abarbeitungsliste werden Elemente aufgenommen, die unterschiedlichen Teilobjekten zugewiesen sind.

Ferner können beispielsweise nur Teilobjekte in die Abarbeitungsliste aufgenommen werden, die eine vorgegebene Mindestgröße aufweisen, beispielsweise wie in Fig. 6a angegeben, eine Mindestgröße von 2 Pixel. Weiterhin ist es auch möglich, dass nur solche Teilobjekte in die Abarbeitungsliste aufgenommen werden, denen eine vorgegebene geometrische Form oder eine vorgegebene Ausrichtung zugeordnet sind. Beispielsweise können dies Teilobjekte sein, die eine längliche oder linienartige Form aufweisen oder Teilobjekte, die in einer gewissen Weise zueinander ausgerichtet sind. Beispielsweise können dies Teilobjekte sein, die eine Hauptlängsachse aufweisen, die in einer vorgegebenen Richtung ausgerichtet ist.

In einem weiteren Schritt, der dem dritten Schritt 16 des Verfahrens 10 entspricht, werden Bildpunkte einer zweiten Art ermittelt, wobei die Bildpunkte der zweiten Art, basierend auf einem Vergleich mit dem zweiten adaptiven Schwellwert erhalten werden. In Fig. 6a sind die Bildpunkte der ersten Art mit einer doppelten Schraffur dargestellt, während die Bildpunkte der zweiten Art mit einer einfachen Schraffur dargestellt sind. Der vierte Schritt 18 des Verfahrens 10, das Verbinden eines ersten und eines zweiten der Teilobjekte mittels Bildpunkten der zweiten Art zu einem erweiterten Teilobjekt, wenn ein Mindestabstand zwischen dem ersten und dem zweiten der Teilobjekte vorhanden ist, wobei das zu erkennende Objekt durch eine Summe der Teilobjekte aus Bildpunkten der ersten Art und/oder der erhaltenen, erweiterten Teilobjekte beschreibbar ist, kann so ausgeführt werden, dass das Verbinden der Teilobjekte jeweils mittels der Bearbeitungsliste zugewiesener Teilobjekte erfolgt.

Die Abarbeitungsliste bzw. Bearbeitungsliste kann der Reihenfolge nach abgearbeitet werden, beispielsweise immer zuerst mit dem ersten Element, oder aber mit zufälliger oder anderer Reihenfolge. So können beispielsweise die Listenelemente der Abarbeitungsliste nach der Größe der Teilobjekte sortiert werden und mit dem größten oder kleinsten der Teilobjekte begonnen werden. Auch andere Sortierregeln können entwickelt werden.

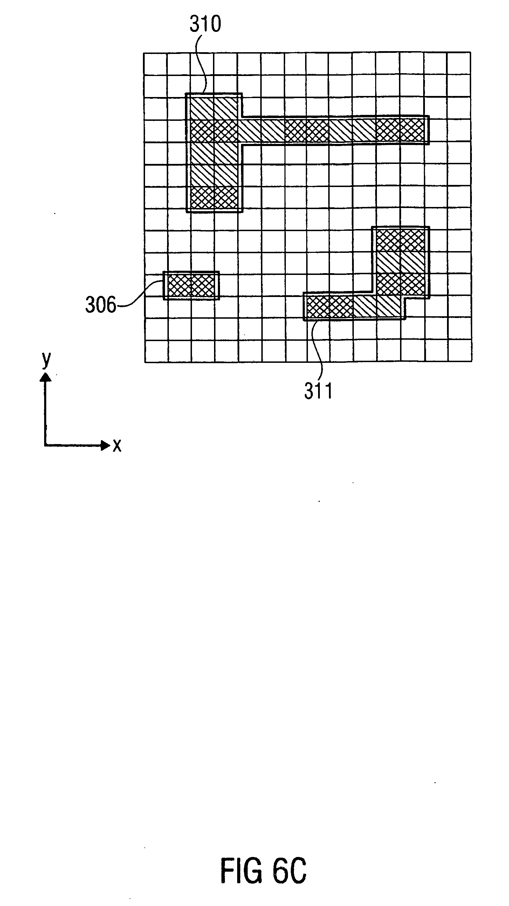

Das Verbinden der Teilobjekte mittels der Abarbeitungsliste zeigt Fig. 6b. In einem ersten Schritt des Verbindens wird das erste Element der Abarbeitungsliste, das dem ersten Teilobjekt 301 zugewiesen ist, ausgewählt und mittels Bildpunkten der zweiten Art, die benachbart zu dem ersten Teilobjekt sind (beispielsweise mittels einer Vierernachbarschaft oder einer Achternachbarschaft) mit dem zweiten Teilobjekt 302, dem dritten Teilobjekt 302 und dem vierten Teilobjekt 304 verbunden, um ein erstes erweitertes Teilobjekt 310 zu bilden. Ausgehend von dem ersten Teilobjekt 301 werden somit alle Teilobjekte, die mittels Bildpunkten der zweiten Art mit dem ersten Teilobjekt 301 verbunden werden können, mit diesem verbunden. Es können somit die den ersten, zweiten, dritten und vierten Teilobjekten zugeordneten Listenelemente der Abarbeitungsliste gelöscht oder als abgearbeitet markiert werden und das nächste Element der Abarbeitungsliste ausgewählt werden. Dies entspricht dem fünften Teilobjekt 305, das entsprechend Fig. 6c mittels Bildpunkten der zweiten Art mit benachbarten Teilobjekten verbunden werden kann. In Fig. 6c ist zu erkennen, dass das fünfte Teilobjekt 305, das siebte Teilobjekt 307 und das achte Teilobjekt 308 zu einem zweiten erweiterten Teilobjekt 311 verbunden wurden. Eine weitere Verbindung ist nicht möglich, da alle Bildpunkte der zweiten Art in die Verbindung mit einbezogen sind. Die Abarbeitungsliste kann um die Elemente 5,7 und 8 gelöscht werden bzw. als abgearbeitet markiert werden. Es befindet sich somit nur ein Listenelement in der Abarbeitungsliste, das dem sechsten Teilobjekt 306 entspricht. Da dieses nicht zu weiteren Teilobjekten hin verbunden werden kann, kann die Abarbeitungsliste ebenfalls das sechste Listenelement löschen bzw. als abgearbeitet markieren. Nachdem die Liste leer bzw. als abgearbeitet markiert ist, kann das zu erkennende Objekt als Summe der erweiterten Teilobjekte 310, 311 und des sechsten Teilobjekts 306, das nicht zu einem erweiterten Teilobjekt verbunden werden konnte, beschrieben werden. Das sechste Teilobjekt 306 ist somit ein Teilobjekt, das nicht mittels Bildpunkten der zweiten Art mit einem weiteren Teilobjekt verbindbar ist, es kann als Einzelteilobjekt in der Summe erhalten bleiben. Die Listenelemente, deren zugewiesene Teilobjekte dem Schritt des Verbindens unterzogen wurden, oder die als Einzelteilobjekte beibehalten werden, können gelöscht oder als abgearbeitet markiert werden. Der Schritt des Verbindens kann somit ausgeführt werden, bis die Abarbeitungsliste leer oder vollständig (als abgearbeitet) markiert ist.

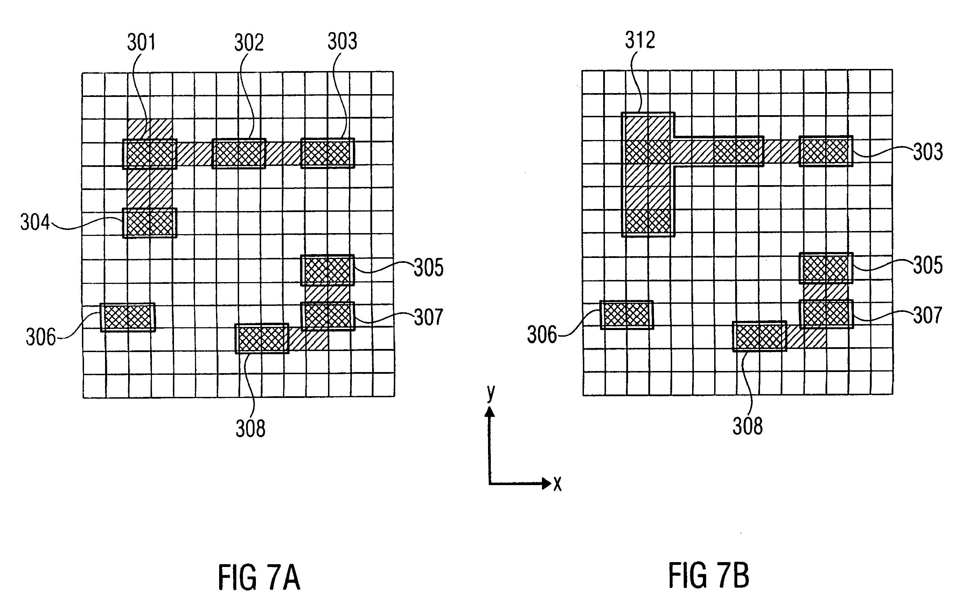

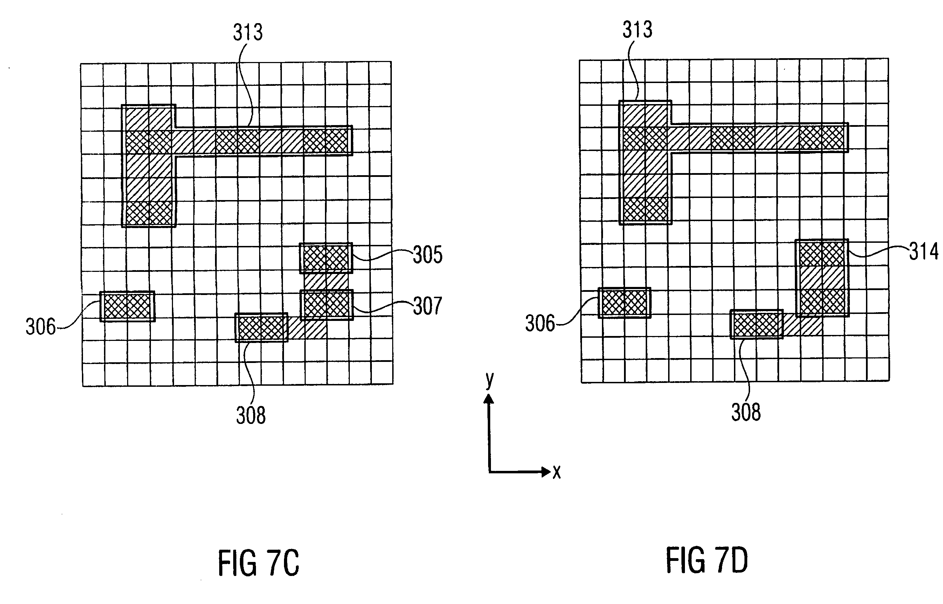

In diesem Ausführungsbeispiel wird bei dem Schritt des Verbindens eine Mehrzahl von Teilobjekten mit Bildpunkten der zweiten Art miteinander verbunden. In einem weiteren Ausführungsbeispiel, das in Fig. 7 gezeigt ist, kann der Schritt des Verbindens von Teilobjekten auch so ausgeführt werden, dass nur Teilobjekte miteinander verbunden werden, die direkt mittels Bildpunkten der zweiten Art miteinander verbindbar sind, ohne über ein weiteres Teilobjekt in die Verbindung mit einbezogen zu werden.

Fig. 7a-7d zeigen Pixeldiagramme eines Verfahrens zum Erkennen eines Objekts gemäß einem weiteren Ausführungsbeispiel der Erfindung. Das Ausführungsbeispiel entspricht dem in Fig. 6 dargestellten Ausführungsbeispiel, wobei der Schritt des Verbindens von Teilobjekten derart ausgeführt wird, dass ein Teilobjekt zunächst nur mit benachbarten Teilobjekten mittels Bildpunkten der zweiten Art verbunden wird, die direkt zu dem Teilobjekt benachbart sind. Fig. 7a entspricht Fig. 6a. Es sind acht Teilobjekte ermittelt worden, die mittels Bildpunkten der zweiten Art untereinander verbindbar sind. Den acht Teilobjekten werden acht Listenelemente einer Abarbeitungsliste zugewiesen. In Fig. 7b wird das erste Element der Liste, das dem ersten Teilobjekt 301 zugewiesen ist, ausgewählt, um das erste Teilobjekt 301 mittels Bildpunkten der zweiten Art mit direkt benachbarten Teilobjekten zu verbinden. Dies sind das zweite Teilobjekt 302 und das vierte Teilobjekt 304. Diese drei Teilobjekte werden zu einem ersten erweiterten Teilobjekt 312 verbunden. Ferner werden die Listenelemente, die dem ersten Teilobjekt 301, dem zweiten Teilobjekt 302 und dem vierten Teilobjekt 304 zugewiesen sind, aus der Abarbeitungsliste gelöscht bzw. als abgearbeitet markiert.

In einem weiteren Schritt, der in Fig. 7c dargestellt ist, wird das nächste Listenelement der Abarbeitungsliste ausgewählt, dies entspricht dem dritten Listenelement, das dem dritten Teilobjekt 303 zugeordnet ist. Das dem dritten Listenelement zugewiesene dritte Teilobjekt 303 wird nun mittels Bildpunkten der zweiten Art mit weiteren Teilobjekten bzw. erweiterten Teilobjekten verbunden. In dieser Darstellung ist das dritte Teilobjekt 303 direkt benachbart zu dem ersten erweiterten Teilobjekt 312, so dass aus dem dritten Teilobjekt 303 und dem ersten erweiterten Teilobjekt 312 ein zweites erweitertes Teilobjekt 313 entsteht. Da das dritte Teilobjekt keine weiteren benachbarten Teilobjekte oder erweiterten Teilobjekte mehr aufweist, die mittels Bildpunkten der zweiten Art verbindbar sind, wird das dem dritten Teilobjekt zugeordnete dritte Listenelement aus der Bearbeitungsliste gelöscht bzw. als abgearbeitet markiert und die Abarbeitung mit dem nächsten Listenelement fortgeführt. Dies ist in Fig. 7d aufgezeigt. Das nächste Listenelement der Abarbeitungsliste entspricht dem fünften Listenelement, das dem fünften Teilobjekt 305 zugeordnet ist. Dieses fünfte Teilobjekt 305 wird in einem nächsten Schritt mittels Bildpunkte der zweiten Art mit direkt benachbarten Teilobjekten der ersten Art bzw. erweiterten Teilobjekten verbunden. Da das fünfte Teilobjekt 305 nur einen direkten Nachbarn aufweist, nämlich das siebte Teileelement 307, wird das fünfte Teilobjekt 305 und das siebte Teilobjekt 307 zu einem dritten erweiterten Teilobjekt 314 verbunden. Danach werden die Listenelemente, die dem fünften Teilobjekt 305 und dem siebten Teilobjekt 307 zugeordnet sind, aus der Abarbeitungsliste gelöscht bzw. als abgearbeitet markiert und mit dem nächsten Listenelement der Abarbeitungsliste fortgefahren. Dies ist das sechste Listenelement, das dem sechsten Teilobjekt 306 entspricht. Da dieses keine benachbarten Teilobjekte oder erweiterten Teilobjekte aufweist, die mittels Bildpunkten der zweiten Art verbindbar wären, wird auch das sechste Listenelement aus der Abarbeitungsliste gelöscht bzw. als abgearbeitet markiert. Die Abarbeitungsliste weist nun nur noch ein achtes Listenelement auf, das dem achten Teilobjekt 308 zugewiesen ist. In einem weiteren Schritt, der in Fig. 7 nicht dargestellt ist, wird das achte Teilobjekt 308 mittels Bildpunkten der zweiten Art mit dem dritten erweiterten Teilobjekt 314 verbunden und das achte Listenelement aus der Abarbeitungsliste gelöscht bzw. als abgearbeitet markiert. Damit ist die Abarbeitungsliste leer bzw. als abgearbeitet markiert, und die erhaltenen erweiterten Teilobjekte bzw. Teilobjekte, die nicht zu erweiterten Teilobjekten verbunden werden konnten, können als zu erkennendes Objekt dargestellt werden.

In einer weiteren Abwandlung des Verfahrens kann die Abarbeitungsliste derart durchlaufen werden, dass ein Teilobjekt, das einem zu bearbeitenden Listenelement der Abarbeitungsliste zugeordnet ist, nur mittels Bildpunkten der zweiten Art mit einem direkt benachbarten Teilobjekt verbunden wird, danach die Listenelemente beider Teilobjekte aus der Abarbeitungsliste gelöscht bzw. als abgearbeitet markiert werden und mit dem nächsten freien Listenelement, das nicht als abgearbeitet markiert ist, fortgefahren wird.

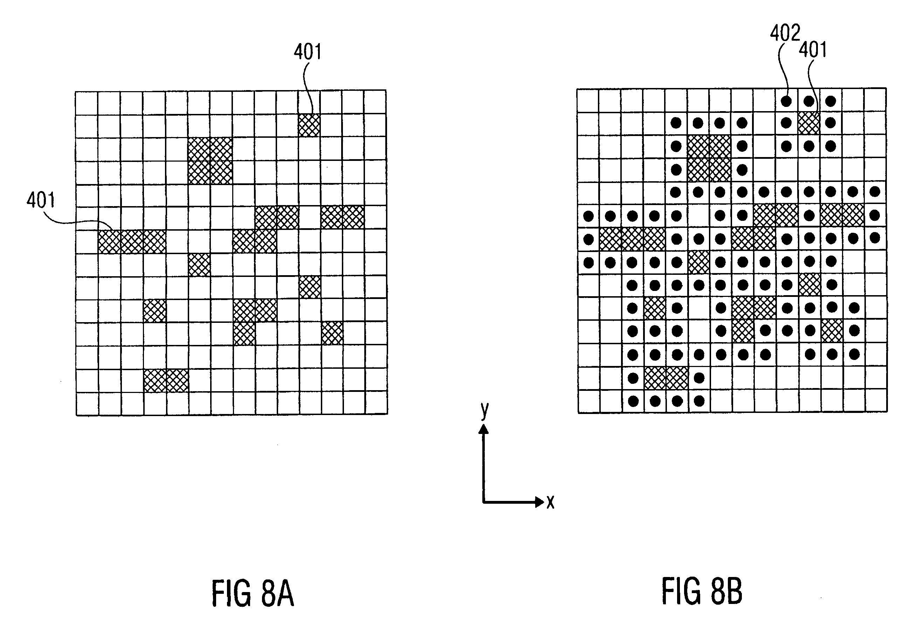

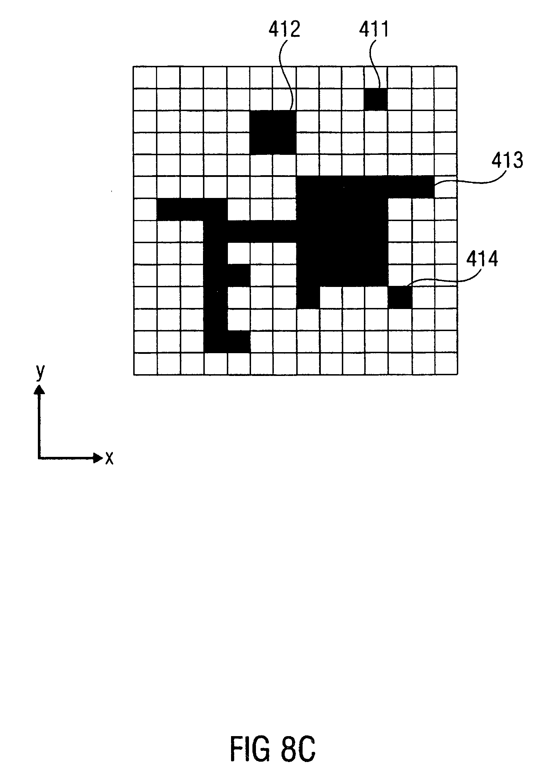

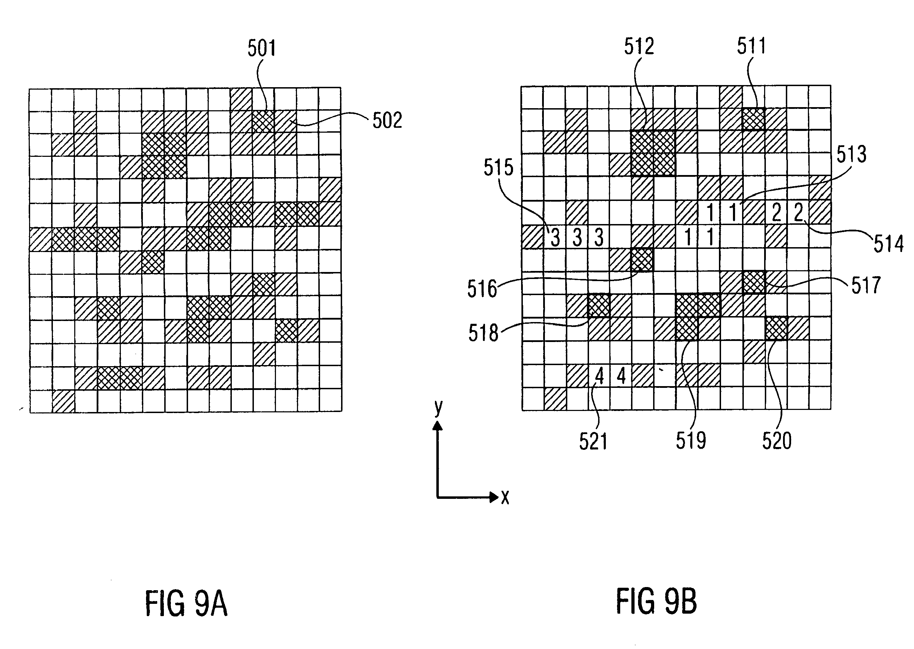

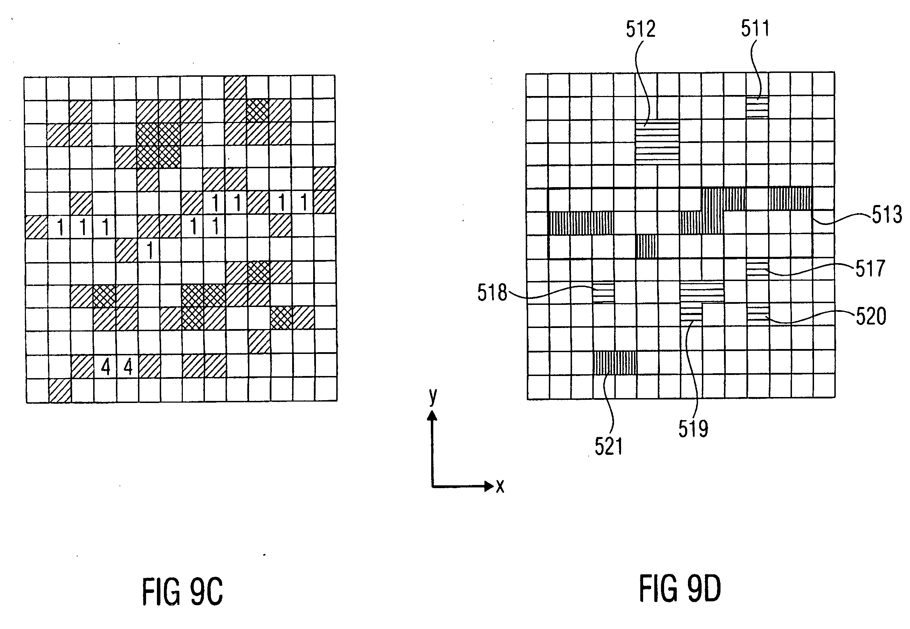

Die Teilobjekte bzw. die erweiterten Teilobjekte können auch als Fragmente bezeichnet werden, die mittels Größe, Form und Ausrichtung in die Summenbildung mit eingehen, um das zu erkennende Objekt darzustellen. Eine Auswahl der Fragmente bezüglich Größe, geometrische Form und Ausrichtung kann in jedem Schritt des Verfahrens erfolgen, das heißt, es können sowohl die Teilobjekte bezüglich Größe, Form und Ausrichtung ausgewählt werden, so dass nur derartige Teilobjekte weiterverarbeitet werden, die eine vorgegebene Größe, eine vorgegebene Form bzw. eine vorgegebene Ausrichtung aufweisen. Weiterhin können auch die erweiterten Teilobjekte bezüglich Größe, Form und Ausrichtung ausgewählt werden, so dass derartige erweiterte Teilobjekte, die eine Abweichung von einer vorgegebenen Größe, Form oder Ausrichtung aufweisen, nicht für die Darstellung des Objektes verwendet werden. Fig. 8 und 9 zeigen vergleichweise den Ablauf des allgemeinen Verfahrens mit einer Closing - Prozedur gemäß einer Software-Bibliothek (Fig. 8) und gemäß einem weiteren Ausführungsbeispiel der Erfindung (Fig. 9).

Fig. 8a zeigt ein Pixeldiagramm mit mittels eines adaptiven Schwellwert-Verfahrens ermittelten Bildpunkten (401). Fig. 8b zeigt das Binärbild aus Fig. 8a, welches durch einen Dilationsschritt erweitert wurde, wobei die Bildpunkte nach dem anfänglichen Binarisieren (401) doppelt schraffiert dargestellt sind und markierte bei der Dilation entstandene Bildpunkte (402) mit einem schwarzen Punkt dargestellt sind. Fig. 8c zeigt das endgültige Binärbild nach einem Erosionsschritt. Es werden nach einer 4-Nachbarschaftsregel 4 Objekte (412-414) gefunden. Beim Zusammenfassen der Objekte nach einer 8-Nachbarschaftsregel werden die Objekte 413 und 414 verschmolzen. Das Objekt 411 ist beispielsweise ein zu kleines Objekt, das nicht weiter berücksichtigt wird.

Fig. 9a zeigt das Ergebnis der anfänglichen Schwellwertbildung (Thresholding) mit 2 Schwellen, wobei die kontrastreiche Schwelle der Schwelle gemäß Fig. 8a entspricht. Kontrastreiche Bildpunkte (501) sind doppelt schraffiert und kontrastarme Bildpunkte (502) einfach schraffiert dargestellt.

Fig. 9b zeigt ein Pixeldiagramm nach einer Zusammenfassung der gefundene Bildpunkte der ersten Art in (Teil-)Objekte, einer Analyse deren Größe und Ausrichtung und einer Erstellung einer Liste der länglichen Objekte. Hierbei werden solche Objekte in die Liste aufgenommen, die wenigstens 2 Pixel groß sind und ein ungleiches Verhältnis zwischen Breite und Höhe aufweisen. Es werden insgesamt 11 Objekte gefunden (511 - 521), darunter sind 4 Objekte (513-515 und 521), die in der Liste gespeichert werden. Die Pixel dieser 4 Objekte (513-515 und 521) sind in Fig. 9b mit 1,2,3 und 4 entsprechend markiert.

Fig. 9c zeigt das Ergebnis einer sukzessiven Erweiterung des in Fig. 9b dargestellten Objekts 513 (mit 1 markiert) über alle benachbarten Bildpunkte der zweiten und ersten Art (nach einer 8-Nachbarschaftsregel) mittels konsequentem Streichen der angeschlossenen Objekte aus der Abarbeitungsliste. Hierbei ist das Objekt 516, obwohl es nicht in der Abarbeitungsliste stand, mit dem Objekt 513 (mit 1 markiert) zusammengeschlossen worden. Dagegen konnte das in Fig. 9b dargestellte Objekt 521 (mit 4 markiert) nicht angeschlossen werden und nicht erweitert werden, da es keine benachbarten Pixel der zweiten Art hat.

Fig. 9d zeigt das Ergebnisbild der Objekterkennung gemäß dem Ausführungsbeispiel der Erfindung. Die in Figur 9b dargestellten Fragmente 513-516 bzw. Teilobjekte sind als einheitliches Objekt erkannt und mit einem Umriss (bounding box) zu einem großen Objekt bzw. erweiterten Teilobjekt (mit 513 bezeichnet) zusammengefasst. Der Rest der Objekte wird ignoriert wegen deren geringen Größe, darunter auch das längliche Objekt 521. Bildpunkte der zweiten Art werden im Ergebnisbild nicht gezeigt und nicht in die Objekte integriert.

Es werden somit Teilobjekte aus Bildpunkten der ersten Art mittels sukzessiver Erweiterung über angrenzende Bildpunkte der zweiten und der ersten Art erweitert, wobei alle erreichten Teilobjekte an das erweiterte Teilobjekt angeschlossen werden. Falls die sukzessive Erweiterung ein weiteres Teilobjekt erreicht, das in der Abarbeitungsliste steht, wird dieses weitere Teilobjekt aus der Liste gestrichen.

Abhängig von den Gegebenheiten kann das erfindungsgemäße Verfahren in Hardware oder in Software implementiert werden. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogramm auf einem Computer abläuft. Ausführungsbeispiele der Erfindung können in digitaler oder analoger Logik, beispielsweise als elektronische oder photonische Schaltungen aufgebaut sein.

Das erfindungsgemäße Konzept zum Erkennen von Objekten lässt sich folgendermaßen zusammenfassen.

Bei dem erfindungsgemäßen Verfahren zum Erkennen eines Objekts auf einem mittels Bildpunkten darstellbaren Bild werden zunächst ein erster und ein zweiter adaptiver Schwellwert für Bildpunkte des Bildes bestimmt, wobei der erste und der zweite adaptive Schwellwert von einer mittleren Intensität in einer Region um den jeweiligen Bildpunkt abhängen. Ferner werden Teilobjekte aus Bildpunkten einer ersten Art ermittelt, wobei die Bildpunkte der ersten Art, basierend auf einem Vergleich mit dem ersten adaptiven Schwellwert erhalten werden. Es werden ferner Bildpunkte einer zweiten Art ermittelt, wobei die Bildpunkte der zweiten Art, basierend auf einem Vergleich mit dem zweiten adaptiven Schwellwert erhalten werden. Schließlich werden ein erstes und ein zweites der Teilobjekte mittels Bildpunkten der zweiten Art zu einem erweiterten Teilobjekt verbunden, wobei das zu erkennende Objekt durch eine Summe der Teilobjekte aus Bildpunkten der ersten Art und/oder der Summe der erhaltenen, erweiterten Teilobjekte beschreibbar ist.

Bei einem Ausführungsbeispiel des erfindungsgemäßen Verfahrens erfolgt der Schritt des Verbindens mittels einer sukzessiven Erweiterung über angrenzende Bildpunkte der zweiten Art oder über angrenzende Bildpunkte der zweiten und ersten Art. Ferner kann die Summe der Teilobjekte aus Bildpunkten der ersten Art und/oder der erhaltenen, erweiterten Teilobjekte zusammengefasst werden, um eine Darstellung des zu erkennenden Objekts zu erhalten. Die Teilobjekte aus Bildpunkten der ersten Art können zumindest eine vorgegebene Mindestanzahl an Bildpunkten umfassen. So bildet sich die Summe der Teilobjekte aus Bildpunkten der ersten Art und/oder der erhaltenen, erweiterten Teilobjekte aus erweiterten Teilobjekten, die eine Mindestanzahl an Bildpunkten aufweisen. Ferner kann das Verbinden des ersten und des zweiten Teilobjekts mittels einer morphologischen Dilation ausgeführt werden, wobei die morphologische Dilation eine Dehnung nur unter Verwendung von Bildpunkten der zweiten Art durchführt.

Bei einem Ausführungsbeispiel weist das Verbinden des ersten und des zweiten Teilobjekts folgende Schritte auf, nämlich ein sukzessives Erweitern eines ersten und/oder zweiten Teilobjekts um angrenzende Bildpunkte der zweiten Art, bis zumindest ein zusammenhängender Pfad aus Bildpunkten der zweiten Art und/oder Bildpunkten der ersten Art zwischen dem ersten und dem zweiten der Teilobjekte erhalten wird, und ein Ermitteln des erweiterten Teilobjekts aus den Bildpunkten des ersten und des zweiten Teilobjekts und den für das sukzessive Erweitern verwendeten Bildpunkten der zweiten Art. Bei dem sukzessiven Erweitern des ersten und/oder des zweiten Teilobjekts werden beispielsweise die angrenzenden Bildpunkte der zweiten Art unter Verwendung einer Achter-Nachbarschaftsbeziehung oder unter Verwendung einer Vierer-Nachbarschaftsbeziehung ermittelt.

Bei einem weiteren Ausführungsbeispiel werden die Teilobjekte aus Bildpunkten der ersten Art unter Verwendung einer Vierer-Nachbarschaftsbeziehung aus benachbarten Bildpunkten der ersten Art ermittelt.

Bei einem weiteren Ausführungsbeispiel hängt der erste adaptive Schwellwert ferner von einem ersten Kontrastfaktor ab, wobei der zweite adaptive Schwellwert ferner von einem zweiten Kontrastfaktor abhängt, der sich von dem ersten Kontrastfaktor unterscheidet. Dabei werden der erste und der zweite adaptive Schwellwert für Bildpunkte des Bildes beispielsweise mittels folgender Beziehungen ermittelt:

$$T_1(x, y) = C_1 \frac{1}{N_{MN}} \sum_{m=-M}^{m=M} \sum_{n=-N}^{n=N} I(x - m, y - n),$$

$$T_2(x, y) = C_2 \frac{1}{N_{MN}} \sum_{m=-M}^{m=M} \sum_{n=-N}^{n=N} I(x - m, y - n),$$

wobei die Bildpunkte des Bildes mittels kartesischer Koordinaten x und y dargestellt sind, I(x,y) eine Intensität eines Bildpunkts mit den kartesischen Koordinaten x und y bezeichnet, $1/N_{MN}$ einen Gewichtungsfaktor, $C_1$ den ersten Kontrastfaktor, $C_2$ den zweiten Kontrastfaktor, $T_1(x,y)$ den ersten adaptiven Schwellwert und $T_2(x,y)$ den zweiten adaptiven Schwellwert für den Bildpunkt mit den kartesischen Koordinaten x und y bezeichnet.

Bei einem weiteren Ausführungsbeispiel bildet die Summe der Teilobjekte aus Bildpunkten der ersten Art und/oder der erhaltenen, erweiterten Teilobjekte sich nur aus Teilobjekten aus Bildpunkten der ersten Art und/oder erhaltenen, erweiterten Teilobjekten, die eine vorgegebene geometrische Form oder Ausrichtung zueinander aufweisen. Hierbei kann die vorgegebene geometrische Form eine Hauptlängsachse aufweisen, wobei die Hauptlängsachse beispielsweise innerhalb eines vorgegebenen Winkelbereichsverläuft.

Bei einem anderen Ausführungsbeispiel bildet die Summe der Teilobjekte aus Bildpunkten der ersten Art und/oder der erhaltenen, erweiterten Teilobjekte sich nur aus Teilobjekten aus Bildpunkten der ersten Art und/oder erhaltenen, erweiterten Teilobjekten, bei denen ein Abstand zwischen einzelnen der Teilobjekte und/oder der erweiterten Teilobjekte einen vorgegebenen Maximalabstand nicht überschreitet. Alternativ bildet die Summe der Teilobjekte aus Bildpunkten der ersten Art und/oder der erhaltenen, erweiterten Teilobjekte sich nur aus Teilobjekten aus Bildpunkten der ersten Art und/oder erhaltenen, erweiterten Teilobjekten, die einander angrenzen.

Ein Ausführungsbeispiel des erfindungsgemäßen Verfahrens umfasst ferner ein Erzeugen einer Abarbeitungsliste mit Listenelementen, wobei jedem Listenelement eines der ermittelten Teilobjekte aus Bildpunkten der ersten Art zugewiesen ist. Dabei kann die den Listenelementen zugewiesenen Teilobjekte eine vorgegebene Mindestgröße aufweisen, wobei die den Listenelementen zugewiesenen Teilobjekte beispielsweise einer geometrischen Form oder Ausrichtung zugeordnet sind. Ferner wird beispielsweise vor dem Schritt des Verbindens das erste Teilobjekt als erstes Listenelement aus der Abarbeitungsliste ausgewählt.

Ferner kann ein weiteres Teilobjekt mit dem erweiterten Teilobjekt mittels einer sukzessiven Erweiterung über angrenzende Bildpunkte der zweiten Art oder über angrenzende Bildpunkte der zweiten und ersten Art verbunden werden, wobei die Teilobjekte, die nicht mittels Bildpunkten der zweiten Art mit einem weiteren Teilobjekt verbindbar sind, als Einzelteilobjekte beibehalten werden. Ferner werden die Listenelemente, dessen zugewiesene Teilobjekte dem Schritt des Verbindens unterzogen werden, markiert oder gelöscht oder als Einzelteilobjekte beibehalten. Der Schritt des Verbindens wird beispielsweise ausgeführt, bis die Abarbeitungsliste leer oder vollständig markiert ist.

Ferner können bei dem Schritt des Verbindens eine Mehrzahl von Teilobjekten mittels Bildpunkten der zweiten Art miteinander verbunden werden.

Ein Ausführungsbeispiel umfasst ein Computerprogramm mit einem Programmcode zum Ausführen der obigen Verfahren, wenn das Computerprogramm auf einem Rechner läuft.

Bei einem Ausführungsbeispiel umfasst eine Vorrichtung zum Erkennen eines Objekts auf einem mittels Bildpunkten darstellbaren Bild eine Einrichtung zum Bestimmen eines ersten und eines zweiten adaptiven Schwellwerts für Bildpunkte des Bildes, wobei der erste und der zweite adaptive Schwellwert von einer mittleren Intensität in einer Region um den jeweiligen Bildpunkt abhängen, eine Einrichtung zum Ermitteln von Teilobjekten aus Bildpunkten einer ersten Art, wobei die Bildpunkte der ersten Art, basierend auf einem Vergleich mit dem ersten adaptiven Schwellwert erhalten werden, eine Einrichtung zum Ermitteln von Bildpunkten einer zweiten Art, wobei die Bildpunkte der zweiten Art, basierend auf einem Vergleich mit dem zweiten adaptiven Schwellwert erhalten werden, und eine Einrichtung zum Verbinden eines ersten und eines zweiten der Teilobjekte mittels Bildpunkten der zweiten Art zu einem erweiterten Teilobjekt, wenn ein Mindestabstand zwischen dem ersten und dem zweiten der Teilobjekte vorhanden ist, wobei das zu erkennende Objekt durch eine Summe der Teilobjekte aus Bildpunkten der ersten Art und/oder der erhaltenen, erweiterten Teilobjekte beschreibbar ist.

Bei einem Ausführungsbeispiel der Vorrichtung ist die Einrichtung zum Verbinden ausgebildet, um eine sukzessive Erweiterung über angrenzende Bildpunkte der zweiten Art oder über angrenzende Bildpunkte der zweiten und ersten Art durchzuführen.

Bei einem anderen Ausführungsbeispiel umfasst die Einrichtung zum Verbinden eines ersten und eines zweiten der Teilobjekte eine Einrichtung zum Zusammenfassen der Summe der Teilobjekte aus Bildpunkten der ersten Art und/oder der erhaltenen, erweiterten Teilobjekte, um eine Darstellung des zu erkennenden Objekts zu erhalten. Bei einem weiteren Ausführungsbeispiel umfassen die Teilobjekte aus Bildpunkten der ersten Art zumindest eine vorgegebene Mindestanzahl an Bildpunkten.

Bei einem weiteren Ausführungsbeispiel bildet die Summe der Teilobjekte aus Bildpunkten der ersten Art und/oder der erhaltenen, erweiterten Teilobjekte sich aus erweiterten Teilobjekten, die eine Mindestanzahl an Bildpunkten aufweisen.

Bei einem weiteren Ausführungsbeispiel ist die Einrichtung zum Verbinden eines ersten und eines zweiten der Teilobjekte ausgelegt, um das Verbinden des ersten und des zweiten der Teilobjekte mittels einer morphologischen Dilation auszuführen, wobei die morphologische Dilation eine Dehnung nur unter Verwendung von Bildpunkten der zweiten Art durchführt.

Bei einem weiteren Ausführungsbeispiel umfasst die Einrichtung zum Verbinden eines ersten und eines zweiten der Teilobjekte beispielsweise ferner eine Einrichtung zum sukzessiven Erweitern eines ersten und/oder zweiten Teilobjekts um angrenzende Bildpunkte der zweiten Art, bis zumindest ein zusammenhängender Pfad aus Bildpunkten der zweiten Art zwischen dem ersten und dem zweiten der Teilobjekte erhalten wird, und eine Einrichtung zum Ermitteln des erweiterten Teilobjekts aus den Bildpunkten des ersten und des zweiten Teilobjekts und den für das sukzessive Erweitern verwendeten Bildpunkten der zweiten Art. Dabei ist die Einrichtung zum sukzessiven Erweitern eines ersten und/oder zweiten Teilobjekts ausgelegt, um bei dem sukzessiven Erweitern des ersten und/oder des zweiten Teilobjekts die angrenzenden Bildpunkte der zweiten Art unter Verwendung einer Achter-Nachbarschaftsbeziehung oder unter Verwendung einer Vierer-Nachbarschaftsbeziehung zu ermitteln.

Bei einem weiteren Ausführungsbeispiel hängt der erste adaptive Schwellwert ferner von einem ersten Kontrastfaktor ab, und der zweite adaptive Schwellwert hängt ferner von einem zweiten Kontrastfaktor ab, der sich von dem ersten Kontrastfaktor unterscheidet, wobei der erste und der zweite adaptive Schwellwert für Bildpunkte des Bildes beispielsweise mittels folgender Beziehungen ermittelt wird:

$$T_1(x,y) = C_1 \frac{1}{N_{MN}} \sum_{m=-M}^{m=M} \sum_{n=-N}^{n=N} I(x-m, y-n),$$

$$T_2(x,y) = C_2 \frac{1}{N_{MN}} \sum_{m=-M}^{m=M} \sum_{n=-N}^{n=N} I(x-m, y-n),$$

wobei die Bildpunkte des Bildes mittels kartesischer Koordinaten x und y dargestellt sind, I(x,y) eine Intensität eines Bildpunkts mit den kartesischen Koordinaten x und y bezeichnet, $1/N_{MN}$ einen Gewichtungsfaktor, $C_1$ den ersten Kontrastfaktor, $C_2$ den zweiten Kontrastfaktor, $T_1(x,y)$ den ersten adaptiven Schwellwert und $T_2(x,y)$ den zweiten adaptiven Schwellwert für den Bildpunkt mit den kartesischen Koordinaten x und y bezeichnet.

Bei einem Ausführungsbeispiel weist die Vorrichtung eine Einrichtung zum Erzeugen einer Abarbeitungsliste mit Listenelementen auf, wobei jedem Listenelement eines der ermittelten Teilobjekte aus Bildpunkten der ersten Art zugewiesen ist.

Die den Listenelementen zugewiesenen Teilobjekte weisen beispielsweise eine vorgegebene Mindestgröße auf, wobei die den Listenelementen zugewiesenen Teilobjekte beispielsweise einer geometrischen Form oder Ausrichtung zugeordnet sind.

Bei einem weiteren Ausführungsbeispiel ist die Einrichtung zum Verbinden ausgebildet, um mittels einer sukzessiven Erweiterung über angrenzende Bildpunkte der zweiten Art oder über angrenzende Bildpunkte der zweiten und ersten Art ein weiteres Teilobjekt mit dem erweiterten Teilobjekt zu verbinden, wobei das Verbinden beispielsweise ausgeführt wird, bis die Abarbeitungsliste leer oder vollständig markiert ist.

Bei einem weiteren Ausführungsbeispiel werden bei dem Verbinden eine Mehrzahl von Teilobjekten mittels Bildpunkten der zweiten Art miteinander verbunden.

Der Schutzbereich der Erfindung wird durch die folgenden Ansprüche definiert.

**Patentansprüche**

1.   Verfahren zum Erkennen eines Objekts (201, 211) auf einem mittels Bildpunkten darstellbaren Bild (200, 210), mit folgenden Schritten:

Bestimmen (12) eines ersten und eines zweiten adaptiven Schwellwertes ($T_1$, $T_2$) für Bildpunkte (200, 210) des Bildes, wobei der erste und der zweite adaptive Schwellwert von einer mittleren Intensität in einer Region um den jeweiligen Bildpunkt abhängen;
Ermitteln (14) von Teilobjekten (101-104) aus Bildpunkten einer ersten Art, wobei die Bildpunkte der ersten Art, basierend auf einem Vergleich mit dem ersten adaptiven Schwellwert ($T_1$) erhalten werden;
Erzeugen einer Abarbeitungsliste mit Listenelementen, wobei jedem Listenelement eines der ermittelten Teilobjekte aus Bildpunkten der ersten Art zugewiesen ist, wobei die den Listenelementen zugewiesenen Teilobjekte (101-104) eine vorgegebene Mindestgröße aufweisen oder einer geometrischen Form oder Ausrichtung zugeordnet sind;
Ermitteln (16) von Bildpunkten (106) einer zweiten Art, wobei die Bildpunkte der zweiten Art, basierend auf einem Vergleich mit dem zweiten adaptiven Schwellwert ($T_2$) erhalten werden;
Verbinden (18) mehrerer der Teilobjekte mittels Bildpunkte der zweiten Art zu einem erweiterten Teilobjekt (110, 111), wenn ein Mindestabstand zwischen einem ersten und einem zweiten Teilobjekt vorhanden ist,
Markieren oder Löschen der Listenelemente, dessen zugewiesene Teilobjekte (101-104) dem Schritt des Verbindens unterzogen werden; und
Ausführen des Schrittes des Verbindens bis die Abarbeitungsliste leer oder vollständig markiert ist;
wobei das zu erkennende Objekt durch eine Summe der Teilobjekte aus Bildpunkten der ersten Art und/oder der Summe der erhaltenen, erweiterten Teilobjekte beschreibbar ist.

2.  Verfahren gemäß Anspruch 1, bei dem der Schritt des Verbindens mittels einer sukzessiven Erweiterung über angrenzende Bildpunkte der zweiten Art oder über angrenzende Bildpunkte der zweiten und ersten Art erfolgt.

3.  Verfahren gemäß Anspruch 1 oder 2, mit folgendem Schritt:

    Zusammenfassen der Summe der Teilobjekte aus Bildpunkten der ersten Art und/oder der erhaltenen, erweiterten Teilobjekte, um eine Darstellung des zu erkennenden Objekts zu erhalten.

4.  Verfahren gemäß einem der vorhergehenden Ansprüche, bei dem die Teilobjekte aus Bildpunkten der ersten Art zumindest eine vorgegebene Mindestanzahl an Bildpunkten umfassen.

5.  Verfahren gemäß einem der vorhergehenden Ansprüche, bei dem die Summe der Teilobjekte aus Bildpunkten der ersten Art und/oder der erhaltenen, erweiterten Teilobjekte sich aus erweiterten Teilobjekten bildet, die eine Mindestanzahl an Bildpunkten aufweisen.

6.  Verfahren gemäß einem der vorhergehenden Ansprüche, bei dem das Verbinden des ersten und des zweiten Teilobjekts mittels einer morphologischen Dilation ausgeführt wird, wobei die morphologische Dilation eine Dehnung nur unter Verwendung von Bildpunkten der zweiten Art durchführt.

7.  Verfahren gemäß einem der vorhergehenden Ansprüche, bei dem das Verbinden des ersten und des zweiten Teilobjekts folgende Schritte aufweist:

    Sukzessives Erweitern eines ersten und/oder zweiten Teilobjekts um angrenzende Bildpunkte der zweiten Art, bis zumindest ein zusammenhängender Pfad aus Bildpunkten der zweiten Art und/oder Bildpunkten der ersten Art zwischen dem ersten und dem zweiten der Teilobjekte erhalten wird; und
    Ermitteln des erweiterten Teilobjekts aus den Bildpunkten des ersten und des zweiten Teilobjekts und den für das sukzessive Erweitern verwendeten Bildpunkten der zweiten Art.

8.  Verfahren gemäß einem der vorhergehenden Ansprüche, bei dem der erste adaptive Schwellwert ferner von einem ersten Kontrastfaktor abhängt, und bei dem der zweite adaptive Schwellwert ferner von einem zweiten Kontrastfaktor abhängt, der sich von dem ersten Kontrastfaktor unterscheidet, wobei der erste und der zweite adaptive Schwellwert für Bildpunkte des Bildes mittels folgender Beziehungen ermittelt wird:

$$T_1(x,y) = C_1 \frac{1}{N_{MN}} \sum_{m=-M}^{m=M} \sum_{n=-N}^{n=N} I(x-m, y-n),$$

$$T_2(x,y) = C_2 \frac{1}{N_{MN}} \sum_{m=-M}^{m=M} \sum_{n=-N}^{n=N} I(x-m, y-n),$$

wobei die Bildpunkte des Bildes mittels kartesischer Koordinaten x und y dargestellt sind, $I(x,y)$ eine Intensität eines Bildpunkts mit den kartesischen Koordinaten x und y bezeichnet, $1/N_{MN}$ einen Gewichtungsfaktor, $C_1$ den ersten Kontrastfaktor, $C_2$ den zweiten Kontrastfaktor, $T_1(x,y)$ den ersten adaptiven Schwellwert und $T_2(x,y)$ den zweiten adaptiven Schwellwert für den Bildpunkt mit den kartesischen Koordinaten x und y bezeichnet.

9.  Verfahren gemäß einem der vorhergehenden Ansprüche, bei dem die Summe der Teilobjekte aus Bildpunkten der ersten Art und/oder der erhaltenen, erweiterten Teilobjekte sich nur aus Teilobjekten aus Bildpunkten der ersten Art und/oder erhaltenen, erweiterten Teilobjekten bildet, die eine vorgegebene geometrische Form oder Ausrichtung zueinander aufweisen.

10. Verfahren gemäß einem der vorhergehenden Ansprüche, bei dem die Summe der Teilobjekte aus Bildpunkten der ersten Art und/oder der erhaltenen, erweiterten Teilobjekte sich nur aus Teilobjekten aus Bildpunkten der ersten Art und/oder erhaltenen, erweiterten Teilobjekten bildet, bei denen ein Abstand zwischen einzelnen der Teilobjekte und/oder der erweiterten Teilobjekte einen vorgegebenen Maximalabstand nicht überschreitet.

11. Verfahren gemäß einem der Ansprüche 1-9, bei dem die Summe der Teilobjekte aus Bildpunkten der ersten Art und/oder der erhaltenen, erweiterten Teilobjekte sich nur aus Teilobjekten aus Bildpunkten der ersten Art und/oder erhaltenen, erweiterten Teilobjekten bildet, die einander angrenzen.

12. Verfahren gemäß einem der vorhergehenden Ansprüche, das ferner einen der folgenden Schritte aufweist:

Verbinden eines weiteren Teilobjekts mit dem erweiterten Teilobjekt mittels einer sukzessiven Erweiterung über angrenzende Bildpunkte der zweiten Art oder über angrenzende Bildpunkte der zweiten und ersten Art;
Beibehalten der Teilobjekte, die nicht mittels Bildpunkten der zweiten Art mit einem weiteren Teilobjekt verbindbar sind, als Einzelteilobjekte; und
Markieren oder Löschen der Listenelemente, die als Einzelteilobjekte beibehalten werden.

13. Verfahren gemäß Anspruch 12, wobei die den Listenelementen zugewiesenen Teilobjekte eine vorgegebene Mindestgröße aufweisen und einer geometrischen Form oder Ausrichtung zugeordnet sind.

14. Verfahren gemäß Anspruch 13, wobei bei dem Schritt des Verbindens eine Mehrzahl von Teilobjekten mittels Bildpunkten der zweiten Art miteinander verbunden werden.

15. Computerprogramm mit einem Programmcode zum Ausführen der Verfahren gemäß einem der Ansprüche 1 bis 14, wenn das Computerprogramm auf einem Rechner läuft.

16. Vorrichtung zum Erkennen eines Objekts (201, 211) auf einem mittels Bildpunkten darstellbaren Bild (200, 210), mit folgenden Merkmalen:

einer Einrichtung zum Bestimmen (12) eines ersten und eines zweiten adaptiven Schwellwerts ($T_1$, $T_2$) für Bildpunkte des Bildes (200, 210), wobei der erste und der zweite adaptive Schwellwert ($T_1$, $T_2$) von einer mittleren Intensität in einer Region um den jeweiligen Bildpunkt abhängen;
einer Einrichtung zum Ermitteln (14) von Teilobjekten (101-104) aus Bildpunkten einer ersten Art, wobei die Bildpunkte der ersten Art, basierend auf einem Vergleich mit dem ersten adaptiven Schwellwert ($T_1$) erhalten werden;
einer Einrichtung zum Ermitteln (16) von Bildpunkten (106) einer zweiten Art, wobei die Bildpunkte der zweiten Art, basierend auf einem Vergleich mit dem zweiten adaptiven Schwellwert ($T_2$) erhalten werden; und
einer Einrichtung zum Erzeugen einer Abarbeitungsliste mit Listenelementen, wobei jedem Listenelement eines der ermittelten Teilobjekte aus Bildpunkten der ersten Art zugewiesen ist, wobei die den Listenelementen zugewiesenen Teilobjekte (101-104) eine vorgegebene Mindestgröße aufweisen oder einer geometrischen Form oder Ausrichtung zugeordnet sind; und
einer Einrichtung zum Verbinden (18) mehrerer der Teilobjekte mittels Bildpunkten der zweiten Art zu einem erweiterten Teilobjekt (110, 111), wenn ein Mindestabstand zwischen einem ersten und einem zweiten der Teilobjekte vorhanden ist, wobei das zu erkennende Objekt durch eine Summe der Teilobjekte aus Bildpunkten der ersten Art und/oder der erhaltenen, erweiterten Teilobjekte beschreibbar ist;
wobei die Einrichtung zum Erzeugen einer Abarbeitungsliste ausgebildet ist, um die Listenelemente, dessen zugewiesene Teilobjekte von der Einrichtung zum Verbinden miteinander verbunden werden, zu markieren oder zu löschen, und
wobei die Einrichtung zum Verbinden ausgebildet ist, das Verbinden der Teilobjekte (101-104) auszuführen, bis die Abarbeitungsliste leer oder vollständig markiert ist.

**Claims**

1. A method for detecting an object (201, 211) on an image (200, 210) representable by picture elements, comprising:

determining (12) first and second adaptive thresholds ($T_1$, $T_2$) for picture elements (200, 210) of the image, wherein the first and second adaptive thresholds depend on an average intensity in a region around the respective picture element;

determining (14) partial objects (101-104) of picture elements of a first type, wherein the picture elements of the first type are obtained on the basis of a comparison with the first adaptive threshold ($T_1$);

generating a processing list with list elements, wherein one of the determined partial objects of picture elements of the first type is assigned to every list element, wherein the partial objects (101-104) assigned to the list elements comprise a predetermined minimum size or are associated with a geometrical shape or orientation;

determining (16) picture elements (106) of a second type, wherein the picture elements of the second type are obtained on the basis of a comparison with the second adaptive threshold ($T_2$);

connecting (18) several of the partial objects to form an extended partial object (110, 111) by picture elements of the second type when a minimum distance exists between a first and a second partial object,

marking or deleting those list elements whose assigned partial objects (101-104) are subjected to the step of connecting; and

performing the step of connecting until the processing list is empty or completely marked;

wherein the object to be detected can be described by a sum of the partial objects of picture elements of the first type and/or the sum of the obtained extended partial objects.

2. The method according to claim 1, wherein the step of connecting is performed by a successive extension via neighboring picture elements of the second type or via neighboring picture elements of the second and first types.

3. The method according to claim 1 or 2, comprising:

combining the sum of the partial objects of picture elements of the first type and/or of the obtained extended partial objects for obtaining a representation of the object to be detected.

4. The method according to any of the previous claims, wherein the partial objects of picture elements of the first type comprise at least a predetermined minimum number of picture elements.

5. The method according to any of the previous claims, wherein the sum of partial objects of picture elements of the first type and/or of the obtained extended partial objects is formed of extended partial objects comprising a minimum number of picture elements.

6. The method according to any of the previous claims, wherein said connecting of the first and second partial objects is performed using morphological dilation, morphological dilation performing dilation by only using picture elements of the second type.

7. The method according to any of the previous claims, wherein said combining of the first and second partial objects comprises:

successively extending a first and/or second partial object by neighboring picture elements of the second type until at least a contiguous path of picture elements of the second type and/or picture elements of the first type between the first and second of the partial objects is obtained; and

determining the extended partial object of the picture elements from the first and second partial objects and from the picture elements of the second type used for the successive extension.

8. The method according to any of the previous claims, wherein the first adaptive threshold further depends on a first contrast factor, and wherein the second adaptive threshold further depends on a second contrast factor differing from the first contrast factor, wherein the first and second adaptive thresholds for picture elements of the image are determined by the following relationships:

$$T_1(x, y) = C_1 \frac{1}{N_{MN}} \sum_{m=-M}^{m=M} \sum_{n=-N}^{n=N} I(x - m, y - n),$$

$$T_2(x, y) = C_2 \frac{1}{N_{MN}} \sum_{m=-M}^{m=M} \sum_{n=-N}^{n=N} I(x - m, y - n),$$

wherein the picture elements of the image are illustrated by Cartesian coordinates x and y, I(x,y) designates an intensity of a picture element with the Cartesian coordinates x and y, $1/N_{MN}$ designates a weighting factor, $C_1$ the first contrast factor, $C_2$ the second contrast factor, $T_1(x,y)$ the first adaptive threshold, and $T_2(x,y)$ the second adaptive threshold for the picture element with the Cartesian coordinates x and y.

9. The method according to any of the previous claims, wherein the sum of the partial objects of picture elements of the first type and/or of the obtained extended partial objects is formed only of partial objects of picture elements of the first type and/or of obtained extended partial objects having a predetermined geometrical shape or orientation to each other.

10. The method according to any of the previous claims, wherein the sum of partial objects of picture elements of the first type and/or of the obtained extended partial objects is formed only of partial objects of picture elements of the first type and/or of obtained extended partial objects, where a distance between individual ones of the partial objects and/or the extended partial objects does not exceed a predetermined maximum distance.

11. The method according to any of claims 1 to 9, wherein the sum of partial objects of picture elements of the first type and/or of the obtained extended partial objects is formed only of partial objects of picture elements of the first type and/or obtained extended partial objects that are adjacent to each other.

12. The method according to any of the previous claims, further comprising:

    connecting a further partial object to the extended partial object by successively extending via neighboring picture elements of the second type or via neighboring picture elements of the second and first types;
    retaining the partial objects, which are not connectable to a further partial object by picture elements of the second type, as individual partial objects; and
    marking or deleting those list elements that are retained as individual partial objects.

13. The method according to claim 12, wherein the partial objects assigned to the list elements have a predetermined minimum size or are associated with a geometrical shape or orientation.

14. The method according to claim 13, wherein the step of connecting comprises connecting a plurality of partial objects to each other by picture elements of the second type.

15. A computer program comprising a program code for performing the method according to any of claims 1 to 14 when the computer program runs on a computer.

16. An apparatus for detecting an object (201, 211) on an image (200, 210) representable by picture elements, comprising:

    a means for determining (12) first and second adaptive thresholds ($T_1$, $T_2$) for picture elements of the image (200, 210), wherein the first and second adaptive thresholds ($T_1$, $T_2$) depend on an average intensity in a region around the respective picture element;
    a means for determining (14) partial objects (101-104) of picture elements of a first type, wherein the picture elements of the first type are obtained on the basis of a comparison with the first adaptive threshold ($T_1$);
    a means for determining (16) picture elements (106) of a second type, wherein the picture elements of the second type are obtained on the basis of a comparison with the second adaptive threshold ($T_2$); and
    a means for generating a processing list with list elements, wherein one of the determined partial objects of picture elements of the first type is assigned to every list element, wherein the partial objects (101-104) assigned to the list elements comprise a predetermined minimum size or are associated with a geometrical shape or orientation; and
    a means for connecting (18) several of the partial objects to form an extended partial object (110, 111) by picture elements of the second type when a minimum distance exists between a first and second one of the partial objects, wherein the object to be detected can be described by a sum of the partial objects of picture elements of the first type and/or of the obtained extended partial objects;

wherein the means for generating a processing list is configured to mark or delete those list elements whose assigned partial objects are connected to each other by the means for connecting, and

wherein the means for connecting is configured to perform said connecting of the partial objects (101-104) until the processing list is empty or completely marked.

**Revendications**

1.  Procédé destiné à la reconnaissance d'un objet (201, 211) dans une image (200, 210) pouvant être représentée au moyen de pixels, aux étapes suivantes consistant à:

    déterminer (12) une première et une deuxième valeur de seuil adaptative ($T_1$, $T_2$) pour les pixels (200, 210) de l'image, la première et la deuxième valeur de seuil adaptative étant fonction d'une intensité moyenne dans une région autour du pixel respectif;
    déterminer (14) des objets partiels (101 à 104) à partir de pixels d'un premier type, les pixels du premier type étant obtenus sur base d'une comparaison avec la première valeur de seuil adaptative ($T_1$);
    générer une liste de traitement avec des éléments de liste, à chaque élément de liste étant attribué l'un des objets partiels déterminés à partir de pixels du premier type, les objets partiels (101 à 104) attribués aux éléments de liste présentant une grandeur minimale prédéterminée ou étant associés à une forme géométrique ou orientation;
    déterminer (16) des pixels (106) d'un deuxième type, les pixels du deuxième type étant obtenus sur base d'une comparaison avec la deuxième valeur de seuil adaptative ($T_2$);
    relier (18) plusieurs des objets partiels à l'aide de pixels du deuxième type, pour obtenir un objet partiel élargi (110, 111) lorsqu'une distance minimale entre un premier et un deuxième objet partiel est présente,
    marquer ou supprimer les éléments de liste dont les objets partiels (101 à 104) attribués sont soumis à l'étape de liaison; et
    exécuter l'étape de liaison jusqu'à ce que la liste de traitement soit vide ou entièrement marquée;
    l'objet à reconnaître pouvant être décrit par une somme des objets partiels à partir de pixels du premier type et/ou la somme des objets partiels élargis obtenus.

2.  Procédé selon la revendication 1, dans lequel l'étape de liaison a lieu au moyen d'un élargissement successif sur des pixels adjacents du deuxième type ou sur des pixels adjacents du deuxième et du premier type.

3.  Procédé selon la revendication 1 ou 2, avec l'étape suivante consistant à:

    regrouper la somme des objets partiels à partir de pixels du premier type et/ou des objets partiels élargis obtenus, pour obtenir une représentation de l'objet à reconnaître.

4.  Procédé selon l'une des revendications précédentes, dans lequel les objets partiels à partir de pixels du premier type comprennent au moins un nombre minimum prédéterminé de pixels.

5.  Procédé selon l'une des revendications précédentes, dans lequel la somme des objets partiels à partir de pixels du premier type et/ou des objets partiels élargis obtenus est formée à partir d'objets partiels élargis présentant un nombre minimum de pixels.

6.  Procédé selon l'une des revendications précédentes, dans lequel la liaison du premier et du deuxième objet partiel est effectuée à l'aide d'une dilatation morphologique, la dilatation morphologique effectuant une dilation uniquement à l'aide de pixels du deuxième type.

7.  Procédé selon l'une des revendications précédentes, dans lequel la liaison du premier et du deuxième objet partiel comprend les étapes suivantes consistant à:

    élargir successivement un premier et/ou deuxième objet partiel de pixels adjacents du deuxième type, jusqu'à ce que soit obtenu au moins un trajet cohérent de pixels du deuxième type et/ou de pixels du premier type entre le premier et le deuxième des objets partiels; et
    déterminer l'objet partiel élargi à partir des pixels du premier et du deuxième objet partiel et des pixels du deuxième type utilisés pour l'élargissement successive.

8. Procédé selon l'une des revendications précédentes, dans lequel la première valeur de seuil adaptative dépend par ailleurs d'un premier facteur de contraste, et dans lequel la deuxième valeur de seuil adaptative dépend par ailleurs d'un deuxième facteur de contraste qui est différent du premier facteur de contraste, les première et deuxième valeurs de seuil adaptatives étant calculées pour les pixels de l'image à l'aide des rapports suivants:

$$T_1(x, y) = C_1 \frac{1}{N_{MN}} \sum_{m=-M}^{m=M} \sum_{n=-N}^{n=N} I(x - m, y - n),$$

$$T_2(x, y) = C_2 \frac{1}{N_{MN}} \sum_{m=-M}^{m=M} \sum_{n=-N}^{n=N} I(x - m, y - n),$$

les pixels de l'image étant représentés au moyen de coordonnées cartésiennes x et y, I(x, y) désignant une intensité d'un pixel aux coordonnées cartésiennes x et y, $1/N_{MN}$ désignant un facteur de pondération, $C_1$ désignant le premier facteur de contraste, $C_2$ désignant le deuxième facteur de contraste, $T_1(x, y)$ désignant la première valeur de seuil adaptative et $T_2(x, y)$ désignant la deuxième valeur de seuil adaptative pour le pixel aux coordonnées cartésiennes x et y.

9. Procédé selon l'une des revendications précédentes, dans lequel la somme des objets partiels à partir de pixels du premier type et/ou des objets partiels élargis obtenus est formée uniquement d'objets partiels à partir de pixels du premier type et/ou d'objets partiels élargis obtenus présentant entre eux une forme géométrique ou orientation prédéterminée.

10. Procédé selon l'une des revendications précédentes, dans lequel la somme des objets partiels à partir de pixels du premier type et/ou des objets partiels élargis obtenus est formée uniquement d'objets partiels à partir de pixels du premier type et/ou d'objets partiels élargis pour lesquels une distance entre des objets individuels des objets partiels et/ou des objets partiels élargis n'excède pas une distance maximale prédéterminée.

11. Procédé selon l'une des revendications 1 à 9, dans lequel la somme des objets partiels à partir de pixels du premier type et/ou des objets partiels élargis obtenus est formée uniquement d'objets partiels à partir de pixels du premier type et/ou d'objets partiels élargis obtenus adjacents l'un à l'autre.

12. Procédé selon l'une des revendications précédentes, comprenant par ailleurs l'une des étapes suivantes consistant à:

relier un autre objet partiel avec l'objet partiel élargi au moyen d'un élargissement successif sur des pixels adjacents du deuxième type ou sur des pixels adjacents du deuxième et du premier type;
maintenir comme objets partiels individuels les objets partiels qui ne peuvent pas être reliés au moyen de pixels du deuxième type avec un autre objet partiel; et
marquer ou supprimer les éléments de liste qui sont maintenus comme objets partiels individuels.

13. Procédé selon la revendication 12, dans lequel les objets partiels attribués aux éléments de liste présentent une grandeur minimale prédéterminée et sont associés à une forme géométrique ou orientation.

14. Procédé selon la revendication 13, dans lequel, à l'étape consistant à relier, une pluralité d'objets partiels sont reliés l'un à l'autre au moyen de pixels du deuxième type.

15. Programme d'ordinateur avec un code de programme pour réaliser le procédé selon l'une des revendications 1 à 14 lorsque le programme d'ordinateur est exécuté sur un ordinateur.

16. Appareil destiné à la reconnaissance d'un objet (201, 211) dans une image (200, 210) pouvant être représentée au moyen de pixels, aux caractéristiques suivantes:

un moyen destiné à déterminer (12) une première et une deuxième valeur de seuil adaptative ($T_1$, $T_2$) pour les pixels de l'image (200, 210), la première et la deuxième valeur de seuil adaptative ($T_1$, $T_2$) étant fonction d'une intensité moyenne dans une région autour du pixel respectif;

un moyen destiné à déterminer (14) des objets partiels (101 à 104) à partir de pixels d'un premier type, les pixels du premier type étant obtenus sur base d'une comparaison avec la première valeur de seuil adaptative ($T_1$);

un moyen destiné à déterminer (16) des pixels (106) d'un deuxième type, les pixels du deuxième type étant obtenus sur base d'une comparaison avec la deuxième valeur de seuil adaptative ($T_2$); et

un moyen destiné à générer une liste de traitement avec des éléments de liste, à chaque élément de liste étant attribué l'un des objets partiels déterminés à partir de pixels du premier type, les objets partiels (101 à 104) attribués aux éléments de liste présentant une grandeur minimale prédéterminée ou étant associés à une forme géométrique ou orientation;

un moyen destiné à relier (18) plusieurs des objets partiels à l'aide de pixels du deuxième type, pour obtenir un objet partiel élargi (110, 111) lorsqu'une distance minimale entre un premier et un deuxième objet partiel est présente, l'objet à reconnaître pouvant être décrit par une somme des objets partiels à partir de pixels du premier type et/ou la somme des objets partiels élargis obtenus;

le moyen destiné à générer une liste de traitement étant réalisé pour marquer ou supprimer les éléments de liste dont les objets partiels attribués sont reliés l'un à l'autre par le moyen destiné à relier; et

le moyen destiné à relier étant réalisé pour exécuter la liaison des objets partiels (101 à 104) jusqu'à ce que la liste de traitement soit vide ou entièrement marquée.

Bestimmen eines ersten und eines zweiten adaptiven Schwellwertes für Bildpunkte des Bildes, wobei der erste und der zweite adaptive Schwellwert von einer mittleren Intensität in einer Region um den jeweiligen Bildpunkt abhängen

Ermitteln von Teilobjekten aus Bildpunkten einer ersten Art, wobei die Bildpunkte der erster Art, basierend auf einem Vergleich mit dem ersten adaptiven Schwellwert erhalten werden

Ermitteln von Bildpunkten einer zweiten Art, wobei die Bildpunkte der zweiten Art, basierend auf einem Vergleich mit dem zweiten adaptiven Schwellwert erhalten werden

Verbinden eines ersten und eines zweiten der Teilobjekte mittels Bildpunkten der zweiten Art zu einem erweiterten Teilobjekt, wenn ein Mindestabstand zwischen dem ersten und dem zweiten der Teilobjekte vorhanden ist, wobei das zu erkennende Objekt durch eine Summe der Teilobjekte aus Bildpunkten der ersten Art und/oder der erhaltenen, erweiterten Teilobjekte beschreibbar ist

FIG 1

32 — Anfängliche Segmentierung : Adaptive Schwellwertbildung mit zwei Schwellen

34 — Blob – Zurückgewinnung und Klassifikation : Blob – Finder (4-Nachbarschaft)

36 — Objekt - Wachstum : Logisch-Morfologische Dilatation (Dehnung)

38 — Geometrische Zusammenführung

40 — Objekt - Überprüfung

30

FIG 2

**FIG 3B**

100

102b

104b

105

101b

106

103b

4. Schritt — 18
1. Iteration

x

y

**FIG 3A**

100

102

104

105

10i

103

1. Schritt — 12
2. Schritt — 14
3. Schritt — 16

111

110

4. Schritt — 18
Ergebnis

**FIG 3D**

y
x

100

102c

104c

105

101c

103c

4. Schritt — 18
2. Iteration

**FIG 3C**

FIG 4A

EP 2 187 351 B1

FIG 4B

EP 2 187 351 B1

FIG 4C

FIG 4D

FIG 4E

EP 2 187 351 B1

**FIG 5A**

211

210

**FIG 5B**

211b

210b

**FIG 5C**

211c

210c

**FIG 5D**

211d

210d

FIG 6B

FIG 6A

FIG 6C

FIG 7B

FIG 7A

FIG 7D

FIG 7C

FIG 8B

FIG 8A

FIG 8C

FIG 9A

FIG 9B

EP 2 187 351 B1

FIG 9D

FIG 9C

**EP 2 187 351 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KENNETH R. CASTLEMAN.** Digital Image Processing. Prentice-Hall, 1996, 447-481

- **X. JIANG ; D. MOJON.** Adaptive Local Thresholding by Verification Based Multithreshold Probing with Application to Vessel Detection in Retinal Images. *IEEE Trans. On Pattern Analysis and Machine Intelligence,* 2003, vol. 25 (1), 131-137